(19) Europäisches Patentamt / European Patent Office / Office européen des brevets

(11) **EP 3 608 625 B1**

(12) **EUROPÄISCHE PATENTSCHRIFT**

(45) Veröffentlichungstag und Bekanntmachung des Hinweises auf die Patenterteilung:
**25.10.2023 Patentblatt 2023/43**

(51) Internationale Patentklassifikation (IPC):
**G01B 9/02** *(2022.01)*      *G01B 11/26* *(2006.01)*
*G01B 11/00* *(2006.01)*      *G01B 21/04* *(2006.01)*

(21) Anmeldenummer: **18187664.0**

(52) Gemeinsame Patentklassifikation (CPC):
**G01B 9/02091;** G01B 9/02072; G01B 11/007;
G01B 11/26; G01B 21/042; G01B 2290/65

(22) Anmeldetag: **07.08.2018**

(54) **OCT VERMESSUNG**

OCT MEASURING SYSTEM

SYSTÈME DE MESURE OCT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(43) Veröffentlichungstag der Anmeldung:
**12.02.2020 Patentblatt 2020/07**

(73) Patentinhaber: **Hexagon Technology Center GmbH**
**9435 Heerbrugg (CH)**

(72) Erfinder:
• **JENSEN, Thomas**
**9400 Rorschach (CH)**
• **YANG, Zheng**
**88046 Friedrichshafen (DE)**

(74) Vertreter: **Kaminski Harmann**
**Patentanwälte AG**
**Landstrasse 124**
**9490 Vaduz (LI)**

(56) Entgegenhaltungen:
**EP-A1- 2 690 395     EP-A1- 3 182 062**
**EP-A1- 3 642 655     DE-A1-102018 000 887**

• **HELEN D. FORD ET AL: "Coherent fibre bundles in full-field swept-source OCT", PROCEEDINGS OF SPIE, Bd. 7168, 12. Februar 2009 (2009-02-12), Seite 71682P, XP055537356, 1000 20th St. Bellingham WA 98225-6705 USA ISSN: 0277-786X, DOI: 10.1117/12.808953 ISBN: 978-1-5106-2099-5**

**Beschreibung**

Die Erfindung betrifft ein optisches System mit einer Strahlablenkung gemäß Anspruch 1 sowie ein Verfahren zur Ermittlung eines Werts einer Strahlablenkung mittels einer OCT-Messung gemäß Anspruch 11. Unter anderem betrifft die Erfindung insbesondere eine beispielhafte, spezielle Ausführungsform in einer scannenden OCT-Messeinheit bzw. einer industriellen Koordinatenmessmaschine, anhand welcher die Erfindung hier exemplarisch im Detail erläutert wird.

Eine Ausführungsform der Erfindung betrifft dabei speziell eine scannenden OCT-Vermessung (=Optical Coherence Tomography), also eine optische Kohärenztomographie mit einer lateralen Scan-Bewegung der OCT-Messstrahlung auf der Oberfläche des Messobjekts.

Messungen an Objekten mittels optischer Kohärenztomographie (OCT) haben sich in den letzten Jahren nicht nur in der Medizintechnik, sondern auch im industriellen Bereich, etabliert, speziell zur zerstörungsfreien Prüfung von Produkten, etwa in der Qualitätssicherung oder auch sogar inline in Produktionsprozessen. Bei einer derartigen OCT erfolgt im Allgemeinen eine berührungslose Messung anhand von Interferogrammen eines axial in die Objekttiefe gerichteten Messstrahls mit einem überlagerten Referenzstrahl, im Sinne einer Weißlicht- oder Kurzkohärenz-Interferometrie. Die dabei entstehende optische Kreuzkorrelation ergibt dabei ein Muster, welches die Stärke lichtreflektierender Strukturen und deren relative optische Wegstrecke als axiales Tiefenprofil abbildet. Ein Spezifikum ist dabei, dass im Allgemeinen bei einer OCT-Messung die Tiefenauflösung von der transversalen Auflösung entkoppelt ist, da die resultierende longitudinale Tiefen-Auflösung dabei primär von der spektralen Breite des verwendeten Lichts abhängt, wohingegen sich die transversale Auflösung primär durch die numerische Apertur der verwendeten Optik ergibt.

Die speziellen Ausgestaltungen von Ausführungsformen von OCT werden dabei grundsätzlich in eine TD-OCT (=Time Domain - Auswertung im Zeitbereich - z.B. mit Längenänderung des Interferometer-Referenzarms und Messung der Intensität) oder eine FD-OCT (Frequency Domain - Auswertung im Frequenzbereich- z.B. mit einem erfassen der Interferenz der einzelnen spektralen Komponenten) unterschieden. Eine spezielle Ausführungsform der FD-OCT, welche sehr gebräuchlich ist, stellt dabei die sogenannten SS-OCT (Swept Source-OCT) dar, bei welcher die Wellenlänge der Strahlungsquelle durchgestimmt wird und somit kein Spektrometer als Detektor erforderlich ist. Andere Bezeichnungen von konkreten OCT-Ausführungsformen sind entsprechend obiger Systematik etwa je nach erfassten Dimensionen ein 1D, 2D oder 3D OCT, jeweils entweder mit einer TD oder FD Auswertung, also beispielsweise eine SS-OCT als 1D-FD-OCT oder eine time encoded Frequency Domain OCT als 3D-TD, etc. Auch die so genannte Full-Field OCT (FF-OCT) ist eine weitere OCT-Variante. Die vorliegende Erfindung ist dabei im Allgemeinen, speziell unter entsprechenden Randbedingungen, unabhängig von der konkret angewandten Ausführungsform der OCT-Messung anwendbar.

Da mit dem selektiven Wirkungsprinzip tendenziell auch kleine Signale, z.B. bis zu einem Bereich unterhalb von Nanowatt detektierbar sind, ist - speziell bei FD-OCT Messungen - in vielen Anwendungen schon eine verhältnismäßig geringe Eingangsleistung des Messlichts hinreichend, wodurch das zu untersuchende Material kaum belastet wird. Das OCT-Verfahren erlaubt dabei prinzipbedingt auch eine vergleichsweise schnelle Auswertung, z.B. im Bereich von etlichen Kilovoxel, Megavoxel oder Gigavoxel pro Sekunde. Bei entsprechend breitbandiger Auslegung, z.B. mit Breitband-Lasern als Lichtquelle, kann dabei eine hohe Tiefenauflösung, z.B. etwa im Bereich von Mikrometern und auch darunter erzielt werden, oft als UHR-OCT bezeichnet. Die wellenlängenabhängige Eindringtiefe der verwendeten elektromagnetischen Strahlung ist meist einer der primären Beschränkungen für einen Einsatz von OCT- Verfahren. Beispielhafte Ausführungsformen finden sich etwa in US 2017/261 308, US 2017/307 353, etc.

Dabei können optional beispielsweise auch weitere Aspekte, wie z.B. eine Dopplerverschiebung (Doppler-OCT, etwa zur Geschwindigkeitsmessung), Streuung, Absorption, Dispersion, Polarisationsänderung, der untersuchten Materialien ermittelt werden, oder es kann selektiv nach bestimmten Molekülen gesucht werden (molecular contrast OCT). Zur reinen Vermessung von Oberflächen ohne nennenswerte Eindringtiefe wird in technologisch grundsätzlich verwandter Weise auch oft ein sogenanntes optisches Kohärenzradar angewendet, welches jedoch lediglich ein profilgebendes Oberflächen-Scan-Verfahren ohne Tomogram-Information darstellt.

Um ein hinreichend großes flächiges Tomogram oder Profilbild bzw. Volumenerfassung zu erhalten, muss dabei der Messstrahl transversal in eine oder zwei Richtungen über die Oberfläche des Messobjekts geführt werden, was hier im Folgenden auch als Scannen bezeichnet wird. Beispiele finden sich etwa in WO 2014/096 262 oder US 2017/020 387). Dieses Scannen ist dabei wünschenswerterweise - speziell im Lichte der oben genannten hohen Auflösung des OCT-Messverfahrens an sich - ebenfalls mit einer hohen Positionsauflösung, vorzugsweise mit einer zumindest annähernd zur transversalen Positionsauflösung des OCT-Verfahrens ähnlichen Auflösung durchzuführen. Alternativ zum Scannen schlägt EP 2 690 395 mehrere parallele Emissions-Kanäle vor. Selbst prinzipbedingt flächig erfassende Prinzipien wie etwa ein FF-OCT erfordert in vielen Fällen ein Scannen um hinreichend große Oberflächenbereiche mit entsprechender Auflösung erfassen zu können Dieses kann sich in der Praxis durchaus schwierig realisierbar gestalten. Zur Strahlablenkung können dabei, neben bewegten optischen Elementen, wie Spiegeln, Prismen, Linsen, etc. alternativ auch unbewegte Ablenkprinzipien, wie z.B. nach dem akustooptischen oder elektrooptischen Prinzip, angewendet werden. Am häufigsten kommen dabei wohl (meist in einer Dreh- oder Schwenkbewegung) bewegte Ablenkspiegel zum Einsatz. Deren schnelle und hochpräzise Ansteuerung und Positionsregelung gestaltet sich dabei im Allgemeinen herausfordernd, insbesondere bezüglich deren Positionsfeedback. Speziell wenn zudem geringe dimensionale Abmessungen angestrebt werden, ist zudem ein Einsatz von hierfür klassischerweise verwendeten Galvanometern (wie etwa in WO 2017/220 510) oft schwierig. MEMS - also Mirosystemtechnik oder MicroElectroMechanicalSystems bieten mit sogenannten MEMS-Spiegeln (beispielsweise in DE 20 2017 105 001 oder ähnlich den Prinzipien jener Chips, welche in DLP(-Projektions)-Chips zum Einsatz kommen) würden zwar einen Ansatz für eine Miniaturisierung bringen, jedoch sind gerade diese in Ihrer Auslenkung oft vergleichsweise stark nichtlinear und dynamikabhängig, und somit für eine positionsgenaue und zuverlässige Strahlführung, welche bei einem derartigen Scannen erforderlich ist, wenig geeignet. Durch deren geringe bewegte Masse würden derartige MEMS-Strahlablenkungen aber auch eine hohe Dynamik der Ablenkung in Aussicht stellen.

Es ist daher eine Aufgabe der vorliegenden Erfindung eine Strahlablenkung von Lichtstrahlen zu verbessern, insbesondere im Hinblick auf das präzise Bekanntsein ihrer aktuellen Positions- oder Winkelablenkung, womit beispielsweise auch entsprechend eine genaue Positionierung der Strahlablenkung, etwa mit einem entsprechenden Regelkreis, ermöglicht wird. Neben der Positionsgenauigkeit, sollte dabei die Strahlablenkung nicht nur geometrisch präzise, sondern vorzugsweise auch zeitlich schnell erfolgen, beispielsweise um einen schnellen Lage-Regelkreis der Strahlablenkung zu erlauben. In manchen Anwendungen ist auch eine exakte Regelung auf eine Soll-Lage nicht primär erforderlich, sondern es ist hinreichend die aktuelle tatsächliche Lage nur mit hoher Genauigkeit zu kennen. Auch wäre es vorteilhaft, dass dabei eine allfällige bewegte Masse der Strahlablenkung nicht oder zumindest kaum erhöht wird, insbesondere etwa um auch eine hohe mechanische Dynamik der Strahlablenkung erzielen zu können.

Beispiele einer der vielen möglichen Anwendungen in welchen sich derartige Problematiken stellen, lassen sich unter anderem etwa in der Metrologie finden, speziell etwa bei Koordinatenmessmaschinen (CMM) mit optischen Messproben oder Tastköpfen, oder anderen hochpräzisen Messgeräten für Messungen im Mikrometerbereich oder darunter. Auch bei anderen meteorologischen Verfahren, welche eine Scann-Bewegung, exakten Positionierung oder Richtungskalibrierung von Messstrahlung aufweisen, kann die Erfindung angewandt werden, etwa bei Entfernungsmessern, Rotationslaser, Laser-Tracker, Tachymetern, Totalstationen, Laser-Scanner, Laser-Markern etc. Aber auch andere Anwendungen in Industrie, Forschung, Medizin und Technik können von der vorliegenden Erfindung profitieren, speziell wenn diese Anwendungen eine Ablenkung von optischer Arbeitsstrahlung, etwa für Vermessungs-, Markierungs- oder Bearbeitungsaufgaben erfordern, insbesondere wenn diese von einer schnellen und/oder in ihrer Position bekannten, vorzugsweise genau bekannte, Strahlablenkung profitieren können. Etwa in der Elektronik-, Halbleiter- und Bildschirmtechnik, Materialbearbeitung, additiven Fertigungsverfahren, etc.

Diese Aufgaben werden erfindungsgemäß durch die Merkmale der unabhängigen Ansprüche gelöst bzw. diese Lösungen durch Merkmale der abhängigen Ansprüche weitergebildet. Die vorliegende Erfindung betrifft ein Optisches System mit einer Optischen Kohärenz Tomographie- (OCT-) Messeinrichtung und einer Strahlablenkeinheit zur lateralen Ablenkung, insbesondere einer Positions- und/oder Winkelablenkung, eines Strahlengangs der OCT-Messeinrichtung. Bei dem optischen System kann es sich insbesondere um ein optisches Messsystem zur Ermittlung von Oberflächenprofilen von Messobjekten handeln, beispielsweise um einen Teil eines OCT-Scanners oder einer industriellen Koordinaten-Messmaschine zur optischen Abtastung von Oberflächen im Sub-Millimeter Bereich, bzw. um einen Tastkopf oder ein Tastkopf-System einer derartigen Messmaschine.

Dabei befindet sich im Strahlengang eine optische Komponente, welche derart ausgebildet ist, dass in Abhängigkeit von der lateralen Position des abgelenkten Strahlengangs ein Rückreflex der optischen Komponente in seiner longitudinalen Lage entlang des Strahlengangs unterschiedlich ausgestaltet ist. Bei dem Rückreflex in diesem Sinne handelt es sich insbesondere um einen Rückreflex, welcher mittels einer OCT-Messung erfassbar ist, speziell in seiner longitudinalen Lage entlang des Strahlengangs, beispielsweise in einem Tomogramm der optischen Komponente.

In anderen Worten befindet sich entsprechend der Erfindung im abgelenkten Strahlengang eine optische Komponente, welche derart ausgebildet ist, dass - in Abhängigkeit von der lateralen Position des abgelenkten Strahlengangs auf der optischen Komponente - ein Rückreflex an oder in der optischen Komponente in seiner, entlang des Strahlengangs longitudinalen Lage unterschiedlich ausgestaltet ist.

Das optische System weist eine Auswerteeinheit auf, welche derart ausgebildet ist, dass ein Wert der lateralen Positions- und/oder Winkelablenkung der Strahlablenkeinheit anhand einer von der OCT-Messeinrichtung bestimmten longitudinalen Lage des Rückreflex an der optischen Komponente an der aktuellen lateralen Position bestimmbar ist.

Die optische Komponente ist dabei nach der Strahlablenkeinheit angeordnet und wird vom Strahlengang transmittiert oder durchdrungen . Insbesondere kann die optische Komponente in Bezug auf die Messstrahlung der OCT-Messung im Wesentlichen transmittierend sein, speziell etwa zu mindestens 80% oder 90% oder mehr transmittierend sein.

In unterschiedlichen Ausführungsformen ist die optische Komponente als dezidierte Komponente zur Erzeugung des Rückreflexes eingeführt oder es ist eine bereits für einen anderen Zweck vorhandene optische Komponente im Strahlengang zur Erzeugung des Rückreflexes ausgebildet. Beispielsweise kann die optische Komponente derart ausgebildet sein, dass diese an unterschiedlichen lateralen Positionen auf der optischen Komponente jeweils einen Rückreflex aufweist, vorzugsweise einen Rückreflex von weniger als 10% oder weniger als 5% einer Intensität einer das optische Objekt an dieser Position transmittierenden optischen Strahlung. Diese Rückreflexe weisen dabei in einer longitudinalen Richtung, welche im Wesentlichen orthogonal zur Lateralrichtung liegt, jeweils eine unterschiedliche Lage - und somit longitudinale Distanz auf. Insbesondere ist die optische Komponente dabei derart ausgebildet, dass ein definierter und/oder bekannter Zusammenhang zwischen lateraler Position und longitudinaler Lage gegeben ist. In andern Worten kann die optische Komponente speziell derart ausgebildet sein, dass diese an unterschiedlichen lateralen Positionen auf der optischen Komponente jeweils einen Rückreflex aufweist, welcher in einer, im wesentlichen orthogonal zur Lateralrichtung liegenden longitudinalen Lage, eine unterschiedliche OCT-Messdistanz aufweist.

Bei dem optischen System kann, beispielsweise in einer Ausführungsform zur scannenden Vermessung von Oberflächen von Messobjekten mittels einer OCT-Messung, mittels demselben Strahlengang der OCT-Messung sowohl ein bestimmen der Positions- und/oder Winkelablenkung der Strahlablenkeinheit als auch ein optisches Vermessen eines Messobjekts erfolgen.

In einer speziellen Ausführungsform kann der Strahlengang von der Ablenkeinheit auf einer Einkoppelfläche eines Bildleiters oder Image-Fibre-Bundle (IFB) lateral abgelenkt werden. Über diesen Bildleiter wird der Strahlengang dann ortsabhängig weitergeleitet, sodass der Strahlengang an einer lateralen Stelle an einer Auskoppelfläche des Bildleiters ausgekoppelt wird, welche von jener lateralen Stelle an der Einkoppelfläche abhängt, an welcher das Einkoppeln erfolgt. Der Strahlengang wird also anders ausgedrückt an einer zu einer Einkoppelposition korrespondierenden lateralen Position an der Auskoppelfläche des Bildleiters hin zu einem Messobjekt ausgekoppelt. Die Orte an Ein- und Auskoppelfläche können dabei 1:1 oder auch nach einer anderen, vorzugsweise bekannten, Funktion korrespondieren. Beispiele derartiger Bildleiter oder Bildleitfasern finden sich unter anderem z.B. in DE 10 2013 002 400 oder DE 10 2015 216 770, oder sind beispielsweise in Publikationen von H. Ford, R. Tatam beschreiben, wie etwa in "Coherent fibre bundles in full-field swept-source OCT" (SPIE 7168, 2009), "Fibre imaging bundles for full-field OCT" (Meas. Sci. Tech. 18, p.2949, 2007) oder "Passive OCT probe head for 3D duct inspection" (Meas. Sci. Tech. 24, no.9, 2013). Die Ein- und Auskoppelflächen können dabei z.B. Abmessungen von mehreren bis hunderten Quadratmillimetern betragen und beispielsweise eine Ortsauflösung von einigen Mikrometern aufweisen.

In einer speziellen Ausführungsform kann dabei auch die Ein- und/oder Auskoppelfläche des Bildleiters einen Rückreflex für die OCT-Messung zur Ermittlung des Werts der aktuellen Ablenkung bereitstellen.

Der Strahlengang kann also mit einem nach der Strahlablenkeinheit angeordneten Bildleiter, insbesondere einem Image-Fibre-Bundle, ausgebildet sein, in welchen der abgelenkte Strahlengang eingekoppelt wird und welcher an einer, der Einkoppel-Stelle zugeordneten Auskoppel-Stelle die Strahlung auskoppelt, sodass entsprechend ein lateraler Messort an einem Messobjekt angezielt wird, welcher von der Ablenkung am Einkoppel-Ende abhängig ist.

Die Positions- und/oder Winkelablenkung des Strahlengangs kann beispielsweise durch eine bewegliche, reflektierende Fläche erfolgen. Insbesondere kann in einer Ausführungsform die Ablenkeinheit als mikro-elektromechanische (MEM-) Spiegel-Ablenkeinheit ausgebildet sein, sodass die reflektierende Fläche beispielsweise eine Dimension von nur wenigen Millimetern oder auch von weniger als einem Millimeter aufweist. Die Ablenkeinheit kann dabei einer Ausführungsform eine Ablenkung in einer Dimension bereitstellen. In einer anderen Ausführungsform kann auch eine Ablenkung in zwei Dimensionen erfolgen.

In einer Ausführungsform kann auch ein Teil der Ablenkeinheit selbst, insbesondere die reflektierende Fläche, die optische Komponente ausbilden, welche den Rückreflex für die OCT-Messung bereitstellt.

Das erfindungsgemäße optische System kann dabei speziell als ein optisches Oberflächen-Messsystem, beispielsweise an einer OCT-Scanner-Einheit zur hochgenauen Oberflächenvermessung oder als Teil einer Koordinatenmessmaschine (CMM) ausgebildet sein. Insbesondere kann die Erfindung in Form eines CMM-Tastkopfs, bzw. eines CMM-Tastkopf-Systems ausgebildet sein. Ein solcher Tastkopf kann speziell dazu Ausgebildet sein, eine Vermessung in Form eines optischen Scannens von Oberflächen eines Messobjekts im Sub-Millimeter Bereich bereitzustellen, insbesondere mittels der OCT-Messung. In einer Ausführungsform kann ein solcher CMM-Tastkopf auch einen Bildleiter für den Strahlengang der OCT-Messung aufweisen.

In anderen Worten kann eine Ausführungsform der vorliegenden Erfindung auch als dadurch gekennzeichnet beschrieben werden, dass sich im Strahlengang eine optische Komponente befindet, welche derart ausgebildet ist, dass entlang des Strahlengangs eine longitudinale Lage eines (mittels OCT-Messeinrichtung in einem Tomogramm erfassbaren) Rückreflex der optischen Komponente in Abhängigkeit von einer lateralen Position des abgelenkten Strahlengangs an der optischen Komponente unterschiedlich ausgestaltet ist.

Eine OCT-Messung kann dabei beispielsweise ausgebildet sein mit zumindest einer Lichtquelle, (insbesondere einer Breitband-Lichtquelle, einer wellenlängen-durchstimmbaren Lichtquelle oder einer kurzkohärenten Laserlichtquelle), zumindest einem Interferometer, (insbesondere einem Michelson- oder Mirau-Interferometer, sowie ein Common-Path Interferometer wie Fizeau-Interferometer oder ein Linnik-Interferometer mit symmetrischen Optiken), zumindest einem Referenzarm, (insbesondere einem in seiner Länge fixen oder variierbaren Referenzarm), zumindest einem optischen Detektor, (insbesondere einem breitbandigen, spektral auswertenden oder schmalbandigen Punkt- Linien oder Flächensensor), und zumindest einer OCT-Auswerteinheit, (insbesondere welche für eine Auswertung eines Interferrogramms nach einem OCT-Messprinzip ausgebildet ist.

Anders ausgedrückt, kann erfindungsgemäß mittels einer Optischen Kohärenz Tomographie (OCT-) Messung ein Vermessen einer longitudinalen optischen Eigenschaft einer optischen Komponente in einem durch die Strahlablenkeinheit abgelenkten Strahlengang der OCT-Messung erfolgen, welche longitudinale optische Eigenschaft an unterschiedlichen lateralen Positionen der optischen Komponente, insbesondere in bekannter Weise, unterschiedlich ausgebildet ist. Speziell kann dabei insbesondere eine, in bekannter Weise winkel- und/oder positionsabhängige longitudinale optische Eigenschaft einer optischen Komponente in einem durch die Strahlablenkeinheit abgelenkten Strahlengang der OCT-Messung mit der OCT-Messung vermessen werden, und anhand dieser longitudinalen OCT-Messung der longitudinalen optischen Eigenschaft die Position- und/oder Winkelablenkung der Ablenkeinheit ermittelt werden.

Die Erfindung betrifft dabei auch eine Methode oder ein Verfahren zur Bestimmung eines Werts einer Lateralpositions- oder Winkelablenkung einer Strahlablenkeinheit in einem optischen System. Die Lateralpositions- oder Winkelablenkung ist dabei variierbar, beispielsweise direkt oder indirekt mittels eines elektrischen Ansteuersignals.

Entsprechend der Erfindung erfolgt dabei mittels einer optischen Kohärenz Tomographie Messung (OCT-Messung) ein Ermitteln von zumindest einer longitudinalen Lage von zumindest einem Rückreflex an zumindest einer optischen Komponente im Strahlengang einer - durch die Strahlablenkeinheit abgelenkten - Messstrahlung der OCT-Messung. Anhand der ermittelten longitudinalen Lage des Rückreflexes erfolgt dann ein Ermitteln des Werts der Lateralpositions- oder Winkelablenkung der Strahlablenkeinheit.

Dabei kann speziell ein Bereitstellen dieses Werts an eine Messeinheit und/oder eine Steuereinheit einer Maschine erfolgen. Anhand dieses Werts kann mit einer elektronischen Ansteuereinheit auch zusätzlich oder alternativ ein Regeln der Ablenkung der Strahlablenkeinheit erfolgen, beispielsweise mit einem generieren von elektrischen Ansteuersignalen für die Ablenkeinheit.

Dabei kann das Bestimmen des Werts der Lateralpositions- oder Winkelablenkung der Strahlablenkeinheit anhand einer, insbesondere bekannten, Beziehung zwischen der ermittelten longitudinalen Lage des Rückreflex an der optischen Komponente zu der lateralen Position der abgelenkten Messstrahlung auf der optischen Komponente erfolgen. Die optische Komponente wird dabei von der Messstrahlung transmittiert. Dabei kann ein wesentlicher Anteil der Messstrahlung transmittieren, beispielsweise zu mindestens 80%, 90% oder auch mehr, speziell kann ein derartiger Anteil der Messstrahlung die optische Komponente transmittieren, dass mit diesem transmittierten Anteil ein Vermessen eines sich im Strahlengang nach der optischen Komponente befindlichen Messobjekts durchführbar ist. Die optische Komponente kann dabei speziell derart ausgebildet sein, dass diese eine, insbesondere in bekannter Weise, von einer lateralen Position der optischen Messstrahlung auf der optischen Komponente abhängige, unterschiedliche longitudinale Lage des Rückreflexes aufweist.

In einem Anwendungsbeispiel kann die Erfindung z.B. eine Methode zur Ablenkungsbestimmung in einem Tastkopf eines Koordinatenmessgeräts bereitstellen. Der Tastkopf kann dabei speziell für eine lateral scannenden OCT-Messung einer Oberfläche eines Messobjekts ausgebildet sein, und es kann bei diesem ein Ablenkungswert einer Messstrahlung der OCT-Messung nach einem hier beschriebenen Verfahren ermittelt werden. Dabei kann in einer Ausführungsform auch eine Tomogramm-Messung an der optischen Komponente und eine profilgebende Messung am Messobjekt mit demselben Messaufbau durchgeführt werden.

Eine Ausführungsform der Erfindung kann beispielsweise als eine Einrichtung zur Bestimmung eines Werts einer veränderlichen lateralen Positions- und/oder Winkelablenkung ausgebildet sein, welche aufweist:

- ◦ eine Strahlablenkeinheit zur Erzielung der veränderlichen lateralen Positions- und/oder Winkelablenkung,
- ◦ eine, insbesondere im wesentlichen transmittiven, optische Komponente nach der Strahlablenkeinheit,
- ◦ eine OCT-Messeinrichtung zur Bestimmung einer longitudinalen Lage zumindest einer Rückreflexion, welche entlang eines, von der Strahlablenkeinheit abgelenkten Strahlengangs einer Messstrahlung der OCT-Messeinrichtung an der optischen Komponente auftritt, und
- ◦ eine Auswerteeinheit, welche derart ausgebildet ist, dass der Wert der lateralen Positions- und/oder Winkelablenkung der Strahlablenkeinheit anhand der von der OCT-Messeinrichtung bestimmten longitudinalen Lage des Rückreflexes an der optischen Komponente bestimmbar ist.

Dabei kann die optische Komponente sich in einem Mess-Strahlengang der OCT-Messeinrichtung befinden und speziell derart ausgebildet sein, dass in Abhängigkeit von einer lateralen Position des abgelenkten Mess-Strahlengangs an der optischen Komponente, der Rückreflex der optischen Komponente in seiner longitudinalen Lage entlang des Strahlengangs unterschiedlich ausgestaltet ist. Dabei kann der Rückreflex mittels OCT-Messeinrichtung in seiner longitudinalen optischen Distanz entlang des Strahlengangs bestimmt werden, und aus diese Distanz auf eine zugehörige laterale Position des Strahlengangs auf der optischen Komponente geschlossen werden, beispielsweise anhand einer bekannten Beziehung zwischen lateraler Position und longitudinaler Distanz.

Anders ausgedrückt, erfolgt mittels einer OCT-Messung ein longitudinales Vermessen einer optischen Komponente in einem, mittels der Strahlablenkeinheit abgelenkten Strahlengang der OCT-Messung, wobei die optische Komponente eine optische Eigenschaft aufweist, welche lateralpositionsabhängig in ihrer (entlang des Strahlengangs) longitudinalen Lage unterschiedlich ausgebildet ist, insbesondere wobei die optische Eigenschaft eine OCT-vermessbare Eigenschaft ist, welche in bekannter Weise lateral unterschiedlich ausgestaltet ist. Beispielsweise kann die optische Komponente, insbesondere in bekannter Weise, winkel- und/oder lateralpositionsabhängige, longitudinale optische Lagen von zumindest einem vermessbaren OCT-Reflex im Strahlengang der OCT-Messung aufweisen, anhand welcher ein Bestimmen der Lateralpositions- oder Winkelablenkung der Strahlablenkeinheit erfolgt, insbesondere anhand einer Zuordnung der longitudinalen optischen Lagen zur deren Winkel- und/oder Lateralposition, welche Zuordnung z.B. vorab bekannt oder in einem Initialisierungs- oder Referenzierungsvorgang bestimmbar ist.

In einer Ausführungsform kann das Arbeitslicht (also z.B. das Mess- oder Bearbeitungslicht welches auf dem Objekt gescannt werden soll) dabei dasselbe Licht sein, wie jenes das für die OCT Anwendung findet (oder zumindest teilweise dasselbe Licht, etwa in Bezug auf Wellenlänge, Polarisation, etc.). In einer anderen Ausführungsform muss dies aber nicht der Fall sein, sondern es kann auch ein separates OCT- und Arbeitslicht genutzt werden. In speziellen Ausführungsformen kann bei der OCT-Auswertung allenfalls auch der Effekt genutzt werden, dass durch ein gezieltes Unterabtasten auch Objekte außerhalb des eigentlichen Messbereichs hereingespiegelt werden können.

Bei separatem OCT- und Arbeitsstrahl kann, neben einem koaxiale OCT- und Arbeits-Strahlengang, auch ein versetzter oder beispielsweise auch auf eine andere Stelle (z.B. auf die Rückseite) der Ablenkeinheit gerichteter OCT-Strahl genutzt werden. In einer Ausführungsform kann etwa ein breitbandinger Pilotstrahl (vorzugsweise koaxial) zu einem Bearbeitungslicht eingekoppelt werden, mit welchem nach einem OCT-Verfahren erfindungsgemäß eine Scann-Ablenkungsbestimmung erfolgt. Zudem kann in der zuvor genannten Ausführungsform auch ein OCT- oder Kohärenzradar-Prinzip mittels derselben OCT-Strahlung der Ablenkungsmessung genutzt werden, beispielsweise um damit den Bearbeitungsvorgang bzw. dessen Resultate (insbesondere In-Line) zu überwachen oder zu vermessen.

Das erfindungsgemäße Verfahren und die erfindungsgemäße Vorrichtung werden nachfolgend anhand von, in den Zeichnungen schematisch dargestellten, konkreten Ausführungsbeispielen rein beispielhaft näher beschrieben, wobei auch auf weitere Vorteile der Erfindung eingegangen wird. Im Einzelnen zeigen:

Fig. 1a - 1c Blockdiagramme von einigen exemplarischen Ausführungsformen einer OCT-Messung;

Fig. 2a ein Block-Schema einer ersten Ausführungsform zur Erläuterung einer erfindungsgemäßen Ablenkungsbestimmung;

Fig. 2b und Fig. 2c einige Beispiele von anderen Ausführungsformen der vorliegenden Erfindung;

Fig. 3 ein Beispiel eines Tomogramms in einem erfindungsgemäßen System;

Fig. 4a ein erstes Beispiel zur Erläuterung einer Ausführungsform einer erfindungsgemäßen Ablenkungsbestimmung;

Fig. 4b ein zweites Beispiel zur Erläuterung einer Ausführungsform einer erfindungsgemäßen Ablenkungsbestimmung;

Fig. 5 eine Ausführungsform der vorliegenden Erfindung mit einem optischen Bildleiter;

Fig. 6a und Fig. 6b eine Darstellung von beispielhaften Scan-Pfaden einer Ausführungsform der Erfindung zur 3D-Objektvermessung;

Fig. 7a - 7c beispielhafte Ausführungsformen vom erfindungsgemäß ausgebildeten Messköpfen für eine CMM;

Fig. 8a - 8e weitere beispielhafte Ausführungsformen vom erfindungsgemäß ausgebildeten Messköpfen für eine CMM;

Fig. 9a und Fig. 9b Ausführungsformen von Beispielen einer CMM, in welcher eine erfindungsgemäße Ablenkungsbestimmung und/oder obige Messköpfe genutzt sind;

Fig. 10 ein Blockdiagramm eines Beispiels einer erfindungsgemäßen Ausführungsform einer Methode zur Ablenkungsbestimmung entsprechend der vorliegenden Erfindung;

Fig. 11a - 11g einige erfindungsgemäße Ausführungsformen von Beispielen von optischen Elementen für Ausführungsformen der vorliegenden Erfindung.

Die Darstellungen in den Figuren dienen lediglich zur Illustration und sind, sofern nicht explizit angegeben, nicht als exakt maßstäblich zu betrachten. Gleiche oder funktionell ähnliche Merkmale sind, insoweit praktikabel, durchgängig mit denselben Bezugszeichen versehen und werden gegebenenfalls mit einem Buchstaben als Index unterschieden. Die dargestellten Schemata zeigen jeweils die technische Grundstruktur, welche von einem Fachmann entsprechend allgemeinen Grundsätzen ergänzt oder modifiziert werden können.

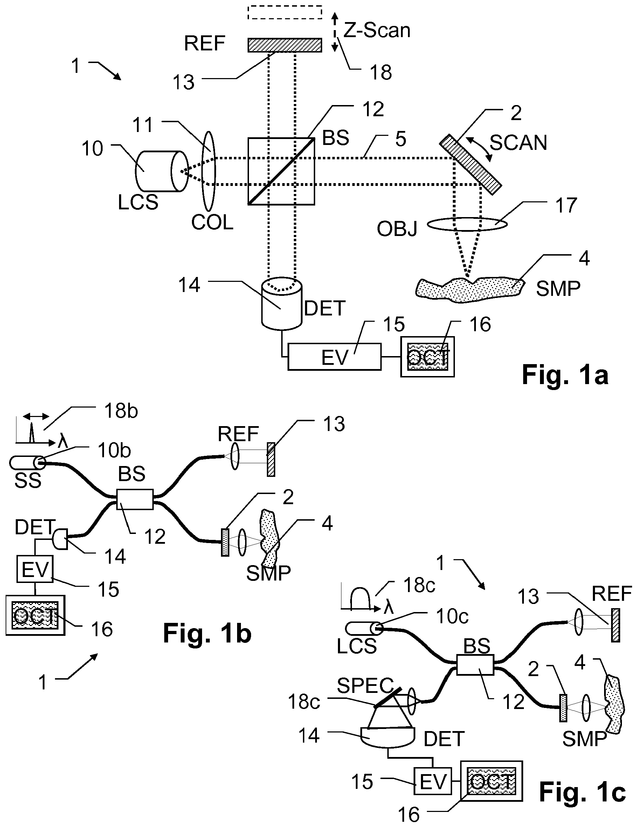

Fig. 1a zeigt schematisch ein mögliches Beispiel einer Ausführungsform einer OCT-Messung 1, welche in einer erfindungsgemäßen Ablenkungsbestimmung einsetzbar ist. Dabei wird die Strahlung eine niedrig kohärente Lichtquelle 10 (Low Coherence Lightsource, LCS), mit einer Kollimator-Optik 11 (Collimation Lense, COL) auf den Strahlteiler 12 (Beam Spliter, BS) gerichtet, sodass ein Interferometer ausbildet wird mit einem Referenzarm zu einem Referenzspiegel 13 (REF) und einem Messarm zu einem Messobjekt 4 (Sample under test, SMP), welches es zu vermessen gilt. Am Detektor 14 (DET) wird dabei eine Interferenz erfasst, und von einer Auswerteelektronik 15 (EV) verarbeitet, welche OCT-Messergebnisse 16 bereitstellt. Beispielsweise etwa ein Photo-Detektor 14 (wie etwa ein Photodiode, Pin-Diode, APD-Diode, SPAD, CCDs, etc., einzeln, in Reihen oder in Arrays), allenfalls mit einer vorgeschalteten Beam-Reducer-Optik, gefolgt von einer elektronischen (analogen und/oder digitalen) Verstärkung, Filterung, Demodulation, Signalverarbeitung, Analog/Digital-Wandlung, etc.), womit ein OCT-Messergebnis (beispielsweise in Form eines Tomogramms, dessen Rohdaten, spezifischen Messwerte aus dem Tomogramm, etc.) ermittelt bzw. errechnet werden. Hierzu wird in diesem Beispiel ein so genannter Z-Scan 18 durchgeführt, mit welchem die Länge des Referenzarms variierbar ist, und damit ein longitudinales Tomogramm ermittelbar ist.

Im Messarm befindet sich dabei, im gezeigten Bespiel vor dem Objektiv 17 (OBJ), eine Strahlablenkeinheit 2 (SCAN), welche im gezeigten Beispiel in Form eines gesteuert beweglichen Ablenkspiegels ausgebildet ist. Mit dieser Strahlablenkeinheit lässt sich der Strahlengang des Messarms der OCT-Messung 1 auf dem Messobjekt 4 lateral bewegen, womit nicht nur ein einzelner Punkt, sondern auch ein Pfad oder eine Fläche auf der Oberfläche des Objekts 4 mit der OCT-Messung erfassbar ist, bzw. der einzelne Punkt lateral auf dem Objekt verschoben werden kann. Die Strahlablenkeinheit kann dabei für eine eindimensionale oder eine zweidimensionale Winkel- oder Lateralablenkung des Strahlengangs über das Objekt 4 ausgebildet sein. Damit kann beispielsweise ein Tomogramm 16 einer Querschnittsfläche mit einer Tiefe von einigen Millimetern bei einer Auflösung im Mikrometer-Bereich ermittelt werden.

Fig. 1b zeigt eine andere beispielhafte Ausführungsform einer OCT-Messung 1 in einer schematischen Darstellung. Dabei wird mit dem Strahlteiler 12 (BS) ein Faser-Interferometer ausgebildet, welches von einer spektral durchstimmbaren Lichtquelle 10b (Swept Source oder tunable Laser, SS) gespeist wird. Hierbei kann die Länge des Referenzarms 13 (REF) fix sein, stattdessen wird die Lichtquelle 10b in ihrer Emissionswellenlänge durchgestimmt, wie dies im Diagramm 18b symbolisiert ist. Der Detektor 14 wandelt die entstehende Interferenz in ein elektrisches Signal um, welches von der Evaluationseinheit 15 (z.B. einem digitalen und/oder analogen Signal-Prozessor) verarbeitet wird, sodass eine Tomogramm-Information in longitudinaler Richtung der Messstrahlung am Messobjekt 4 ermittelt wird. Auch hier ist wiederum eine Strahlablenkeinheit 2 zur lateralen Positions- oder Winkelablenkung der Messstrahlung auf dem Messobjekt 4(SMP) vorhanden, wobei neben oben beschriebenem Ablenkspiegel im Allgemeinen auch andere Ausführungsformen von Strahlablenkeinrichtungen 2 (SCAN) zur Anwendung kommen können.

Fig. 1c zeigt ein weiteres Beispiel einer Ausführungsform einer OCT-Messung 1, welche ebenfalls mit einem Faser-Interferometer 12 (BS) und einem fixen Referenzarm 13 ausgebildet ist. Dabei wird eine breitbandige Lichtquelle 10c LCS eingesetzt, wie dies mit Diagramm 18c symbolisiert ist. Auch hier wird wieder der Strahlengang der OCT-Messung 1 von der Strahlablenkeinheit 2 beeinflusst, wobei durchaus auch Ausführungsformen mit eingeschlossen werden sollen, bei welchen nicht wie gezeigt ein Messobjekt 4 (SMP) mittels OCT vermessen wird, sondern die OCT-Messung primär oder nur zur erfindungsgemäßen Ermittlung eines aktuellen Werts der Ablenkung der Ablenkeinheit 2 genutzt wird. Beispielsweise könnte dabei durch die Ablenkeinheit 2 auch eine weitere Arbeitsstrahlung einer anderen optischen Einrichtung abgelenkt werden, etwa eine zusätzliche Mess-, Beleuchtungs- oder Bearbeitungsstrahlung, etc. Die OCT-Auswertung 15,16 erfolgt in diesem Beispiel mit einer spektralen Auswertung der Interferometrie auf Seiten des Detektors 14, was oft als Fourier-Domain-OCT bezeichnet wird. Beispielsweise mit einem Spektrometer, wie etwa durch ein hier beispielhaft gezeigtes diffraktives Element 18c (Diffraction Grating, DG) und einem Kamera- oder Linien-Sensor 14, oder anderen bekannten Verfahren für eine spektrale Auswertung von optischer Strahlung.

Eine OCT-Auswertung kann dabei in manchen Ausführungsformen nicht nur nach den klassischen Ansätzen, sondern auch unter Nutzung eines Artificial-Intelligence-Systems (AI) erfolgen, welches entsprechend konstituiert und auf derartige Messungen trainiert wurde ausgebildet ist. Beispielsweise kann eine OCT-Auswertung dabei ein Neurales Netzwerk aufweisen, welches auf eine Auswertung von OCT-Tomogrammen (oder den Rohdaten, auf welchen diese basieren) trainiert wurde, speziell z.B. auf eine Bestimmung von longitudinalen Lagen von Reflexen, auch im Falle einer Mehrzielmessung. Damit kann z.B. eine automatische Identifikation und/oder eine automatische Klassifikation von Reflexen der OCT-Messung erfolgen, sowie deren geometrische Lagen (oder der erfindungsgemäß davon abgeleiteten lateralen Scann-Lage, oder einer daraus resultierenden 3D-Lage von Messpunkten am Messobjekt) ermittelt werden.

Derartige OCT-Messungen sind also entsprechend ausgebildet, dass mit diesen ein Tomogramm oder Tiefenbild in longitudinaler Richtung entlang des Strahlengangs erfassbar ist, wobei mit einer lateralen Ablenkung des Strahlengangs mit einer Ablenkeinheit auch eine Querschnittsfläche, bzw. bei einer zweidimensionalen Ablenkeinheit auch ein Volumen erfassbar ist. Dabei sind mit der Messung (auch sehr intensitätsschwache) Rückreflexe oder Rückstreuungen der Messstrahlung in longitudinaler Richtung der Ausbreitung der Messstrahlung erfassbar, welche beispielsweise an Grenzflächen unterschiedlicher Materialen und/oder unterschiedlicher Brechungsindizes auftreten. Je nach Transmitivität für die Messstrahlung können dabei durchaus beträchtliche Messtiefen in Strahlrichtung erfasst werden, insbesondere im Verhältnis zur erzielbaren Tiefen-Auflösung im Bereich von Mikrometern oder gar darunter.

Obige Beispiele von OCT-Messungen 1 dienen dabei lediglich zur Veranschaulichung einiger der gebräuchlichsten OCT-Messprinzipien, und sollten weder als abschließend angesehen werden, noch sollten damit hier nicht explizit gezeigte Varianten, insbesondere bekannte Varianten, Modifikationen und Weiterentwicklungen von OCT-Messungen per se ausgeschlossen werden. Die vorliegende Erfindung lässt sich grundsätzlich in analoger Weise auch auf Ausführungsformen mit allgemeiner elektromagnetische Strahlung, allenfalls auch außerhalb des optischen Wellenlängenbereichs anwenden, wobei der Schutzbereich der gegenwärtigen Erfindung allerdings durch die anhängigen Ansprüche definiert ist.

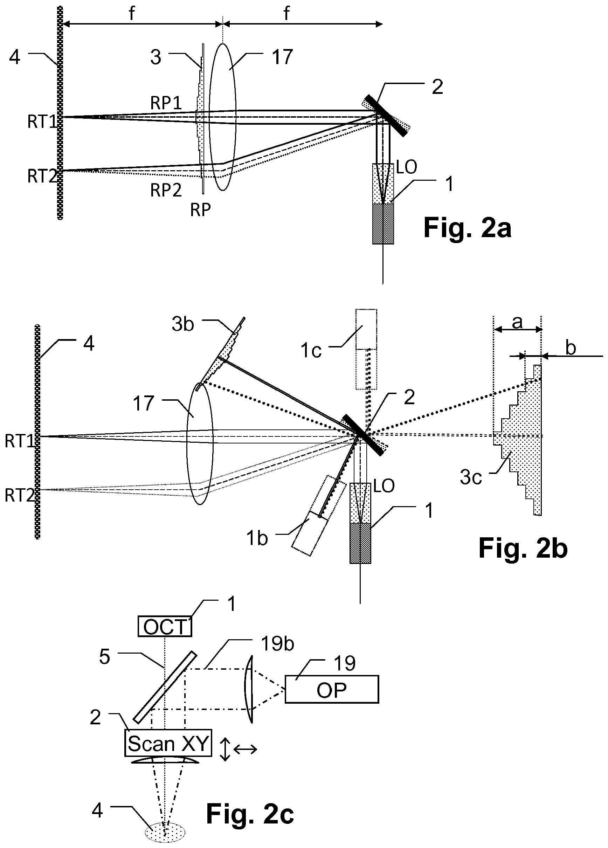

Fig. 2a zeigt eine Detailansicht eines Beispiels einer Ausführungsform einer Strahlablenkeinheit 2. Neben anderen, meist eher exotischen Ansätzen zur Strahlablenkung ist das Prinzip eines bewegten optischen Elements, insbesondere einer bewegten Reflexionsfläche für die optische Strahlung, eines der am häufigsten angewendeten Prinzipien zur Strahlablenkung in optischen Systemen, obgleich die vorliegende Erfindung nicht zwingend auf Strahlablenkungen durch bewegte Spiegel beschränkt ist, sondern auch auf andere Strahlablenkungsprinzipien anwendbar ist. Insbesondere ein Kippen und/oder Drehen eines Spiegels, etwa in Form eines mit einem Spiegel bestückten Galvanometers wird häufig angewandt. Im Zuge der fortfahrenden Miniaturisierung von Systemen kommen aber auch immer häufiger mikromechanische Systeme, so genannte MEMS (Micro-Electro-Mechanical-Systems) zum Einsatz, insbesondere auch, da mit diesen neben einer Miniaturisierung der Baugröße durch geringere Masse etwa auch höhere Dynamiken und Grenzfrequenzen erzielbar sind.

Kompakte MEM-Spiegel ermöglichen heutzutage die Ablenkung der Lichtausbreitung bei relativ hohen Frequenzen (bis in den kHz-Bereich) in einer oder in zwei Winkelrichtungen. Problematisch ist aber die dabei meist fehlende Kenntnis über die tatsächliche Winkelposition als in Abhängigkeit von der Zeit, welche beispielsweise für eine präzise Metrologie von essentieller Bedeutung ist. Eine reine Kenntnis der Ansteuersignale reicht zur Bestimmung der aktuellen, tatsächlichen Winkelposition in der Regel nicht aus, da es in der Praxis insbesondere aufgrund von Latenzen, Hysteresis, Nichtlinearitäten, Dynamikverhalten, Eigenfrequenzen, Temperaturabhängigkeiten, etc. zu Abweichungen zwischen der Soll- und Ist-Positionen der zeitlich variierenden Spiegelpositionen kommen kann. Eine reine Spiegel-PositionsSteuerung, beispielsweise mit einer Modellbildung, Beobachtern, Lookup-Tables etc. führt oft nicht zu einem befriedigenden, hinreichend genauen, stabilen und reproduzierbaren Ergebnis. Auch ist ein vorgängiges Kalibrieren des Spiegelablaufs z.B. an einem bekannten Objekt wie in EP 3 182 062 nur bedingt gültig und hilfreich, insbesondere wegen der sich meist komplex gestaltenden, mehrdimensionalen Parameterabhängigkeit der Winkelpositionen.

Insbesondere bei MEMS-Strahlablenkern 2 sind klassische Positionsgeber für die Ablenkung aufgrund geringer Baugröße und geringen Auslenkungen und entsprechend hohen Positionsauflösungsansätzen kaum abwendbar. Auch kann die vorliegende Erfindung für alternative Strahlablenkungsansätze ohne bewegliche Teile eingesetzt werden.

Erfindungsgemäß wird daher ein Verfahren bzw. eine Vorrichtung vorgeschlagen, welche es ermöglicht eine Ablenkposition von einer Ablenkeinheit 2 für Licht zu erfassen. Insbesondere kann die erfindungsgemäße Lösung dabei vielfach auch eingesetzt werden ohne Veränderungen an der Ablenkeinheit 2 an sich vorzunehmen, was deren Integrierbarkeit in Systemen, Miniaturisierbarkeit, etc. vereinfacht.

Die im Eingang bereits erläuterte optische Kohärenztomographie (OCT) bietet erfindungsgemäß nun die Möglichkeit, mehrere Distanzen von teildurchlässigen Objekten entlang des Strahlengangs gleichzeitig messen zu können. Dies wird in bekannter Weise angewandt, um Tomogramme von teildurchlässigen Messobjekten zu erstellen.

Erfindungsgemäß wird nun, in einer Kombination einer Ablenkeinheit 2 für Lichtstahlen (z.B. mit einem bewegten MEM- oder konventionellen Spiegels) mit einem OCT Messverfahren 1 bereitgestellt. Entsprechend der Erfindung kann dabei eine Ablenkwinkel-abhängige Distanz zur Rückführung der Spiegelposition genutzt werden. Dieses kann dabei durch ein transmittiertes optisches Element im abgelenkten Strahlengang erfolgen, welches eine ablenkungsortsabhängig unterschiedliche, mittels OCT ermittelbare Längeneigenschaft in Strahlrichtung aufweist. Beispielsweise kann hierzu etwa ein ortsabhängiges Längenelement 3 im abgelenkten Strahlengang eingeführt werden, oder es kann auch ein vorhandenes Element 3 mit einer ebensolchen Eigenschaft genutzt werden. Als optische Eigenschaft kann dabei speziell ein Rückreflex oder eine Rückstreuung der OCT-Strahlung entlang des Strahlengangs, zurück in das Interferometer dienen. Ein solcher Rückreflex, welcher mittels des OCT-Messprinzips feststellbar ist, kann beispielsweise in Form einer (meist intensitätsschwachen, also etwa im Prozentbereich der ausgesendeten Strahlung oder vielfach sogar noch deutlich darunter liegenden) Rückstreuung bzw. Reflexion an einem (speziell auch zumindest teilweise oder insbesondere im wesentlichen transmittierten) Objekt entlang des Strahlengangs der OCT-Messstrahlung, welche z.B. vielfach an Grenzflächen zwischen Medien mit unterschiedlichen Brechungsindizes auftritt. Beispielsweise kann aber auch ein in Richtung der Lichtquelle zurückgeworfener Anteil einer diffusen Reflexion oder Streuung, einen derartigen Rückreflex darstellen.

Die mittels OCT ermittelbare Längeneigenschaft in Strahlrichtung, kann dabei speziell einen optischen Abstand definieren, wobei hierzu zusätzlich der Brechungsindex n des oder der sich im Strahlengang befindenden Mediums (z.B. Luft oder Glas) berücksichtigt werden kann. Der optische Abstand kann dabei also speziell nicht nur als eine geometrische Distanz L zum Ort eines OCT-Rückreflexes betragen, sondern speziell auch die geometrische Distanz L (geometrischer Abstand) dividiert durch den Brechungsindex des Zwischenmediums (L/n). Der optische Abstand unterscheidet sich somit vom geometrischen Abstand in Abhängigkeit des vorliegenden Brechungsindex n des Zwischenmediums bzw. der mehreren Zwischenmedien (z.B. Luft und Glas) - somit kann beispielsweise optional auch die geometrische Distanz der optischen Komponente lateral gleichbleiben, jedoch der Brechungsindex lateral unterschiedlich sein - respektive beides realisiert sein.

Die Fig. 2a zeigt zur Erläuterung der Erfindung eine beispielhafte Ausführungsform eines Aufbaus, bei dem kollimiertes Licht aus einem Faserkollimator 1 über eine Ablenkeinheit 2, beispielsweise auch einen winzigen MEM-Spiegel, abgelenkt wird. Je nach Ausmaß der Ablenkung passiert das Licht unterschiedliche Bereiche in der - als Teil der Ausführungsform dieser Erfindung eingeführten - OCT-Reflektionsplatte 3 (RP). In einer Ausführungsform dieser OCT-Reflektionsplatte 3 ist diese beispielsweise auf der einen Seite Antireflex-Beschichtet (AR) - ihre zweite Oberfläche erzeugt jedoch einen Rückreflex, z.B. einen typischen 4% Reflex durch den Glas-Luft-Übergang. Je nach Ablenkposition des Spiegels 2 wird in der gezeigten OCT-Reflexionsplatte 3 RP ein unterschiedlich langer optischer Weg zurückgelegt, bevor ein Teil des OCT-Messlichts (z.B. besagte 4%) zurückreflektiert wird. In einer Variante dieser Ausführungsform mit einem telezentrischen Aufbau, wird insbesondere der Bereich um den Hauptstrahl wieder in die Glasfaser 1 des OCT-Interferometers eingekoppelt. Jedoch sind je nach Anwendung auch andere Varianten zur weiteren Nutzung des Hauptstrahls möglich.

In einer anderen, speziellen Ausführungsform, welche beispielhaft ebenfalls in Fig. 2a angedeutet ist, kann auch ein Common-Path Interferometrie-Aufbau ausgebildet werden, z.B. mit einem lokalen Oszillator (LO), welcher einen Reflex einer optischen Fläche in der Optik nutzt. Beispielsweise kann ein solcher Reflex im hier gezeigten Faserkollimator 1 genutzt werden, es kann aber auch eine andere optische Komponente im Strahlengang derart ausgebildet sein um einen Common-Path Interferometrie-Aufbau auszubilden. Derartiges ermöglicht einen Verzicht auf eine physikalische Ausbildung eines separaten Referenzarms des Interferometers, was weitere Vorteile in Aufbau und Anwendung bringen kann.

Fig. 2b zeigt spezielle alternative Ausführungsformen und Varianten der Erfindung. In einer Ausführungsform, bei welcher ein ohnehin im Strahlengang erforderliches Element, wie etwa die Optik 17, als Element 3 ausgebildet ist, mittels welchem ein Wert der Winkelablenkung des Strahlengangs durch die Ablenkeinheit 2, also beispielsweise einem beweglichen Mikromechanischen-Spiegel, ermittelbar ist. Eine derartige Ausbildung des ohnehin im Strahlengang erforderlichen Elements kann dabei insbesondere derart erfolgen, dass dieses (schwache) Rückreflexe oder Rückstreuungen der OCT-Strahlung zurück in den OCT-Interferometer hervorruft, welche derart ausgebildet sind, dass diese bei unterschiedlichen Ablenkungen durch die Ablenkeinheit, in ihrer longitudinalen Lage entlang des Strahlengangs unterschiedliche Messwerte der OCT-Messeinrichtung ergeben. Anhand einer, vorzugsweise bekannten, Beziehungen zwischen der longitudinalen Lage der Rückreflexe zu den Ablenkungen der Ablenkeinheit kann somit erfindungsgemäß mittels einer OCT-Messung ein Wert der (Winkel- oder Positions-) Ablenkung der Ablenkeinheit ermittelt werden.

In den beiden anderen, ebenfalls in derselben Figur gezeigten Ausführungsformen erfolgt die OCT-Messung 1b, 1c zur Ermittlung der Ablenkung, ohne dass dieselbe OCT-Messstrahlung für eine Vermessung eines Messobjekts 4 genutzt wird. Dabei wird wiederum die von der Ablenkeinheit beeinflusste OCT-Messstrahlung an unterschiedlichen lateralen Positionen auf einem optisches Element 3b bzw. 3c gelenkt, welche aus Sicht der OCT-Messung in ihrer longitudinalen Lage unterschiedliche Orte von Rückreflexionen aufweisen. Bei der OCT-Messung 1b, ist dies das optische Element 3b mit einem, gegenüber einer eigentlichen Arbeitsstrahlung, für welche die Ablenkeinheit 2 primär vorgesehen ist, versetzten Strahlengang. Bei der OCT-Messung 1c wird z.B. ein anderer Teil der Ablenkeinheit 2 genutzt, im gezeigten Beispiel etwa deren Rückseite. Das zugehörige optische Element 3c kann dann beispielsweise je einen Rückreflex an zwei Stellen entlang des abgelenkten Strahlengangs aufweisen, anhand deren longitudinaler Abstandsdifferenz (z.B. die Distanzen "a" und "b") auf einen Ablenkwinkel-Wert der Ablenkeinheit abgeleitet werden kann. Die gezeigten, gestuften optischen Elemente 3b bzw. 3c können dabei symbolisch gesehen werden und können geometrisch auch anders ausgebildet sein, insoweit diese für den abgelenkten OCT-Messstrahl unterschiedliche longitudinale Distanzmesswerte von zumindest einem OCTvermessbaren Rückreflex aufweisen, welche in einer Abhängigkeit von der Winkel- und/oder Positions-Ablenkung der Ablenkeinheit stehen. Wird in einer bevorzugten Ausführungsform dieselbe OCT-Messstrahlung auch für eine Messung an einem Messobjekt 4 genutzt, so wird das optische Element von einem wesentlichen Anteil der OCT-Messstrahlung (also mehr als die Hälfte, vorzugsweise mehr als 80% oder 90% der Messstrahlung) transmittiert (oder passiert, durchdrungen oder reflektiert).

In anderen Worten kann - in einer anderen beispielhaften Ausführungsform - etwa ein Erfassen eines oder mehrerer Distanz- oder Entfernungs-Messwerte mittels eines OCT-Messverfahrens 1 erfolgen, aus welchem Messwert ein Wert einer Ablenkung durch eine Strahlablenkungseinheit 2 ermittelbar ist. Das OCT-Messverfahren 1 bestimmt dabei speziell den Wert einer longitudinalen Distanz- oder Entfernungs-Abmessung an einem, insbesondere transmittierten, optischen Element 3 entlang des Strahlengangs der OCT-Strahlung. Die longitudinale Distanz- oder Entfernungs-Abmessung kann dabei insbesondere an einer Grenzflächen des optischen Elements 3 (oder optional auch zwischen zwei Grenzflächen von einem oder von zwei optischen Elementen) bestimmt werden, welche Grenzflächen im Sinne der Erfindung dadurch gekennzeichnet ist, dass diese derart ausgebildet ist, eine zumindest teilweise Rück-Reflexion der OCT-Strahlung zu bewirken, vorzugsweise eine geringe, beispielsweise in ihrer Intensität einem einstelligen Prozentbereich oder darunter liegende Rück-Reflexion oder Rückstreuung. Mit einer (vorzugsweise eindeutigen,) ablenkwinkelabhängigen Ausgestaltung der longitudinalen Distanzinformation der Rückreflexion entlang des Strahlengangs ist somit der Ablenkwinkel bestimmbar. Die longitudinalen Distanzinformation kann dabei speziell anhand des OCT-Verfahrens mit einem axialen Weißlicht- oder Kurzkohärenz-Interferogram bestimmt werden - beispielsweise mit einer breitbandigen oder durchstimmbaren Strahlquelle, einem Michelson-Interferometer, einem spektral und/oder örtlich auflösenden Sensorelement, sowie einer entsprechenden OCT-Auswerteeinheit. Beispielsweise sind dabei speziell optische Wegstreckeninformationen von teillichtreflektierenden Strukturen des optischen Elements als axiales Tiefenprofil ermittelbar. Eine (vorzugsweise bekannte) Abhängigkeit von axialer Wegstreckeninformation zum Ablenkwinkel macht somit die aktuelle Ablenkung der Ablenkeinheit erfindungsgemäß bestimmbar.

Bei einer Ausführungsform eines Messverfahrens wird dabei dieselbe OCT-Strahlung als Messstrahlung zur Ablenkungsbestimmung als auch als Arbeitsstrahlung zur Vermessung eines Messobjekts (beispielsweise ebenfalls mittels OCT - aber optional auch mittels eines anderen optischen Messverfahrens) genutzt. In einem anderen nicht beanspruchten Beispiel können aber auch unterschiedliche Strahlungen je als Arbeitsstrahlung zur Vermessung des Objekts und als Messstrahlung zur OCT-Ablenkungsbestimmung genutzt werden, entweder koaxial oder multiaxial.

In einer anderen Ausführungsform kann dabei die Arbeitsstrahlung nicht nur für eine Vermessung eines Objekts 4, sondern auch zur Bearbeitung, Belichtung oder Beleuchtung des Objekts 4 oder für eine gezielte Lichtprojektion auf das Objekt 4 ausgeführt sein. Hier kann entweder dieselbe Strahlung als Arbeits- und OCT-Ablenkungsmessstrahlung genutzt werden, oder es kann jeweils unterschiedliche optische Strahlung angewandt werden, je nach Ausführung mit zumindest teilweise koaxialem oder auch multiaxialem Strahlengang.

In Fig. 2c ist ein Beispiel einer koaxialen Nutzung von einer Arbeitsstrahlung 19b und der OCT-Messstrahlung 5 gezeigt. Optional kann dabei die OCT-Messstrahlung 5 der OCT-Messeinrichtung 1 nicht nur zur erfindungsgemäßen Bestimmung der Ablenkung der Ablenkeinheit 2 anhand des optischen Elements, sondern auch für eine Messung an (oder neben) der von einer Arbeitsstrahlung 19b einer Arbeits-Lichtquelle 19 (beispielsweise einer Materialbearbeitungsstrahlung eines Leistungslasers 19 als Operating-Light OP) bearbeiteten Stelle am Objekt 4 genutzt werden. Beispielsweise, um einen Materialabtrag am Objekt 4 zu messen, eine Objektposition anhand einer OCT-Oberflächen-Messung oder OCT-Tomogramm-Messung der Objektoberfläche zu verifizieren oder zu finden, für ein gezieltes Auffinden von zu bearbeitenden Strukturen am Objekt 4 (z.B. spezifische biologische Strukturen an oder unter der Objektoberfläche), etc.

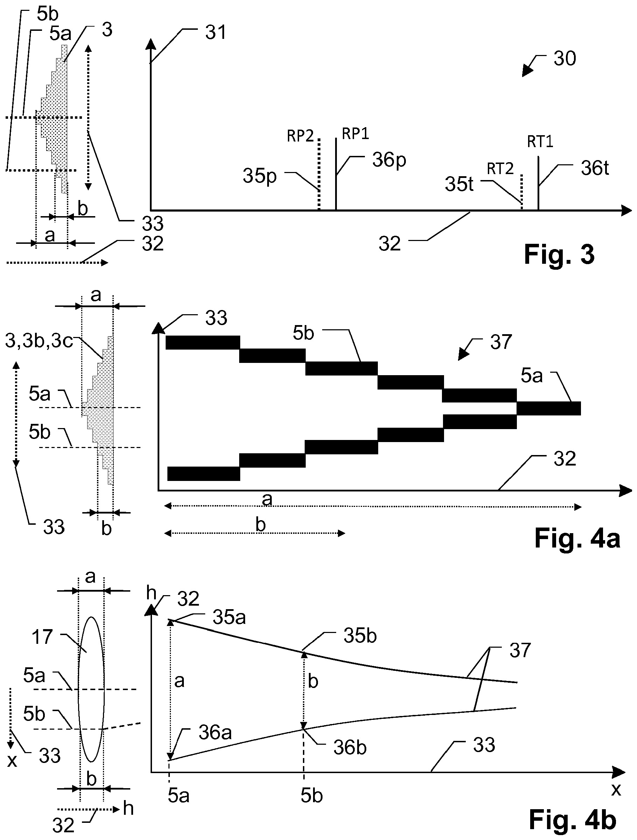

In Fig. 3 ist nochmals obiges Beispiel eines telezentrischen Scanner-Aufbau mit variabler Verzögerungsplatte aus Fig. 2a aufgegriffen. Im gezeigten Tomogramm des OCT-Messsignals ergeben sich dabei mindestens zwei Distanzsignale, die je nach Winkelposition der Strahlablenkung des Spiegels bei anderen Distanzen auftreten, wie diese in Fig. 2a beispielhaft für zwei Winkelpositionen gezeigt sind, mit welchen die Punkte RT1 bzw. RT2 auf dem Target-Objekt 4 angezielt werden. In dem in Fig. 2a gezeigten, einfachen telezentrischen Aufbau kann in paraxialer Näherung für die Bestimmung der lateralen Position y(t) auf dem Target-Objekt 4 (Reflex-Target, RT) die Formel $y(t) \cong f_{lens} \cdot \theta_{MEM}(t)$ angesetzt werden.

Der Winkel ist nun über die Position des Reflexes yRP auf dem optischen Element 3 (RP) kodiert. Bei bekanntem Profil von RP kann dieser aus $\theta_{MEM}(t) \cdot f_{lens} = y_{RP}(t)$ zu $y_{RP} = profile_{RP}(z_{RP})$ bestimmt werden.

Die Figur illustriert dabei eine OCT-Messung, wie diese etwa im Beispiel von Fig. 2a resultieren kann, in einem 2D-Diagramm 30 als Beispiel eines Tomogramms. Es wird mit der OCT-Messung eine Orts- oder Lageinformation von zumindest einem, entlang der Strahlrichtung longitudinal gelegene Rückreflex der OCT-Messstrahlung bestimmt, wobei mit Reflexion hierbei im Sinne einer OCT-Messung keine annähernd 100%ige Spiegelreflexion gemeint ist, sondern eine Rückstreuung der Messstrahlung von einigen Prozent oder weniger (z.B. unter 10% oder unter 5% oder im Bereich von 1% oder in manchen Ausführungsformen auch weniger als 1% der emittierten OCT-Messstrahlung)- wie diese etwa beispielsweise häufig an Grenzschichten zwischen unterschiedlichen Medien oder Schichten mit unterschiedlichen optischen Eigenschaften (wie etwa dem Brechungsindex, etc.), oder Verunreinigungen, etc. auftreten. Speziell kann dabei ein Relativverhältnis von zwei Ortsinformationen, also ein longitudinaler Abstand zwischen zwei Reflexionen bestimmt werden, als etwa ein Abstand zwischen zwei Grenzflächen oder Schichten an einer optischen Komponente im Strahlengang des OCT-Messlichts. In einer anderen Ausführungsform kann auch ein Abstand zwischen unterschiedlichen optischen Komponenten bestimmt werden. In einer wiederum anderen Ausführungsform kann die Ortsinformation auch absolut, also etwa in Bezug auf einen Interferometer-Referenzarm bestimmt werden.

Auf der Abszisse 32 ist Fig. 3 dabei die (entlang des Strahlengangs) longitudinale Lage oder Distanz der Rückreflexe RT1 36t und RT2 35t vom Messobjekt 4, bei unterschiedlichen Strahlablenkungen 36a und 35a der Strahlablenkeinheit- 2 - und somit unterschiedlicher lateraler Positionen RT1 36t und RT2 35t der Strahlung auf dem Mess-Target 4 dargestellt. Ebenso sind die Rückreflexe RP1 36p und RP2 35p an dem hier auch als Reflektorplatte RP bezeichneten optischen Element 3 im Strahlengang, gezeigt.

Auf der Ordinate 31 sind die Rückreflexe jeweils in ihrer Intensität abgetragen.

Links neben dem Diagramm 30 ist nochmals ein Beispiel eines optischen Elements 3, ähnlich der Reflektionsplatte RP in Fig. 2a dargestellt. Darin ist der Strahlengang in einer ersten lateralen Winkel- oder Positions-Ablenkung 36a durch die Ablenkeinheit 2 in lateraler Richtung 32 gezeigt, welcher mit der OCT-Messung 36p im Diagramm 30 in Zusammenhang steht, und bei welcher eine longitudinale Abmessung "a" des optischen Elements 3 im Strahlengang vorherrscht. Mit der OCT-Messung 35p in Diagramm steht der Strahlengang in einer zweiten lateralen Winkel- oder Positions-Ablenkung 35a durch die Ablenkeinheit 2 in lateraler Richtung 32 in Zusammenhang, bei welcher eine longitudinale Abmessung "b" des optischen Elements 3 im Strahlengang vorherrscht.

Ein Beispiel, wie der Ablenk-Winkel der Ablenkeinheit 2 über die Position des Reflexes yRP auf dem optischen Element 3 (RP) bei bekanntem geometrischem Profil der Rückreflexe von RP kodiert sein kann, ist in Fig. 4a gezeigt. Darin ist eine Kodierung der lateral Position yRP über zRP im Diagramm 37 darstellt. Die Abszisse 32 zeigt dabei Werte der Ablenkung der Ablenkeinheit 2 und auf der Determinante 33 sind Beispiele von jeweiligen lateralen Lagen der Rückreflexe im Strahlengang aufgetragen. In diesem Beispiel jeweils eine Rückreflexion bei Eintritt sowie Austritt des Strahlengangs im optischen Element 3. Hier gezeigt ist eine Ausführungsform mit diskreten Stufen der longitudinalen Lagen der Rückreflexe, wie dies beispielsweise bei einer Reflexplatte ähnlich jener in Fig. 2a auftreten, wobei sich auf der Abszisse die jeweils zugehörige Lateral- oder Winkelablenkung ablesen lässt.

Das Design des hierbei beispielhaft genutzten optischen Elements 3 ergibt dabei den Zusammenhang zwischen der Distanz zRP auf der Abszisse 32 von Fig. 4a und der lateralen Lage yRP auf dem optischen Element 3 auf der Ordinate 33. Wie beispielhaft in Fig. 3 gezeigt, entspricht dieser Zusammenhang im gezeigten (vereinfachten) Fall gleich der lateralen Lage des Strahls auf dem Target-Objekt 4 - welche Lage es als tatsächliche Positions-Ablenkung der Strahlablenkeinheit 2 zu bestimmen gilt. Formal lässt sich dieses beispielsweise mit

$$y_{target}(t) = f_{lens} \cdot \frac{y_{RP}(t)}{f_{lens}} = profile_{RP}\big(z_{RP}(t)\big)$$

ausdrücken.

Bei einer Messung des Target-Objekts 4 mit derselben OCT-Strahlung gilt es zudem zu beachten, dass die Distanzänderung bei unterschiedlichen Ablenkwinkeln der Ablenkeinheit 2 zwischen den Werten bei RP1 und RP2 sich zugleich auch auf die Position des Targets RT1 und RT2 addiert. Diese kann jedoch im Nachhinein auf einfache Weise durch entsprechende Subtraktion des bekannten Profils der optischen Elements 3 eliminiert werden.

Eine Auswertung von Rückreflexen am optischen Element 3 in jeder OCT-Messung erlaubt dadurch eine real-time Bestimmung der tatsächlichen Winkelposition des Ablenk-Spiegels während dieser Messung.

Links in **Fig. 4a** ist ein Beispiel einer Ausführungsform mit diskreten Stufen des optischen Elements 3 gezeigt. Die laterale Lage 32 des unabgelenkten Strahlengangs bei 5a ergibt dabei die longitudinale Strecke "a" zwischen einem Eintritts- und einem Austritts-Rückreflex am optischen Element 3d, jene bei abgelenktem Strahlengang 5b die Strecke "b". Diese Strecken sich jeweils im Diagramm 37 beispielhaft angegeben, wobei ein Verlauf einer longitudinalen Lage der Rückreflexe bei lateraler Verschiebung wiedergegeben ist, was eine einfach verständliche Variante einer Codierung/Decodierung der lateralen Ablenk-Lage in der longitudinale Lichtausbreitungsrichtung ausbildet. Andere Ausführungsformen können dabei entsprechend andere, insbesondere auch komplexere Codierungen ausbilden, welche hier der Übersichtlichkeit wegen nicht dargestellt sind. Speziell kann beispielsweise die in der gezeigten Ausführungsform auftretende Zweideutigkeit der Ablenkung nach oben oder unten durch eine entsprechend eindeutige Codierung vermieden werden, die Codierung kann zweidimensional erfolgen, die Codierung kann als merhwertige Binärcodierung mit mehreren longitudinalen Reflexen erfolgen, die Codierung kann analog erfolgen, etc.

In **Fig. 4b** ist ein Variante ähnlich zu Fig. 4a, jedoch ist das optische Element 3 hier in Form einer Linse ausgebildet. Links ist ein Beispiel einer alternativen Ausführungs¬form zu den diskreten Stufen des optischen Elements 3 links von Fig. 4a gezeigt, welches ein sich kontinuierlich veränderndes transmittiertes optisches Element 3 im Strahlengang zeigt. Beispielsweise kann ein derartiges etwa in Form einer Linse 17 ausgebildet sein. Die laterale Lage x 33 des unabgelenkten Strahlengangs bei 5a ergibt dabei die longitudinale Strecke "a" zwischen einem Eintritts- und einem Austritts-Rückreflex am optischen Element 17 in Richtung h 32, jene bei abgelenktem Strahlengang 5b die Strecke "b". Diese Strecken sind jeweils im Diagramm beispielhaft angegeben, wobei das Diagramm dabei bei kontinuierlicher Ablenkungsvariation entsprechend einen kontinuierlichen Verlauf der oberen und unteren Grenzlinien 37 aufweist, beispielsweise in Form einer unteren und/oder oberen Geraden oder Kurve 37 welche einen Verlauf einer longitudinalen Lage h 32 der Rückreflexe bei lateraler Verschiebung x 33 wiedergibt - welcher die geometrische Form der Linsen 17 widerspielgelt. Anhand der in Richtung h 32 mittels OCT bestimmten longitudinalen Relativlage a,b der Eintritts-Reflexe 35a/35b zu jenen der Austritts-Reflexe 36a/36b am Element 17 kann damit die jeweils zugehörige laterale Lage x der Ablenkung der Messstrahlung 5a/5b bestimmt werden. Bei einem symmetrisch ausgebildeten Element 3,17 kann dabei optional z.B. auch eine Mitte zwischen den Reflexen 35 und 36, welche z.B. die Linsenebene 17 charakterisiert, als (insbesondere absolute) Referenz für eine Messdistanz genutzt werden. Je nach Ausführungsform kann auch ein oder mehrere andere Reflexe als Referenz genutzt werden.

In einer weitergebildeten Ausführungsform der Erfindung können beispielsweise auch (schwache Teil-) Reflexe an Komponenten, Grenzflächen, optischen Elementen etc. der Messeinrichtung in ihrer longitudinalen Lage ausgewertet werden um weitere Effekte, Fehlerquellen oder Abweichungen zu Bestimmen und deren Kompensation zu ermöglichen. Beispielsweise kann mit einem (relativen) Auswerten eines Reflexes an einem Anfang und einem Ende eines Messtasters oder Mess-Stylus auf Temperaturänderungen zurückgeschlossen werden, bei welchen sich der Messtaster oder Mess-Stylus entsprechend ausdehnt, insbesondere wobei diese dann auch bei den Messergebnissen kompensiert werden können. In analoger Weise können auch andere Einflüsse wie Verformung, Alterung, Abnutzung, Verschmutzung entsprechend dieses erweiterten Aspekts der Erfindung ermittelt werden. Mit einer entsprechenden Auslegung und Ausbildung der Interferometer-Anordnung können dabei beispielsweise auch mehrere Reflexe in einen Messbereich des Interferometers gemapped oder hineingefaltet werden, um mehrere Relativ- und/oder Absolut-Lagen der Reflexe mit einer einzigen Messung, also beispielsweise in einem einzigen Tomogramm, zu bestimmen.

Bei einigen erfindungsgemäßen Ausführungsformen werden also jeweils zumindest zwei Rückreflexe an zumindest einem optischen Element 3 erfasst, welche relativ zueinander auswertbar sind, womit gegenüber einer absoluten Auswertung, allenfalls einige Fehlerquellen vermieden werden können. Jedoch ist erfindungsgemäß auch eine Auswertung von nur einer lateralpositionsabhängigen Rückreflexlage in longitudinaler Richtung durchführbar, anhand welcher die laterale Ablenkung bestimmbar ist. Alternativ können auch mehrere Rückreflexe und/oder mehrere optische Elemente 3 ausgewertet werden. Speziell können dabei neben einer explizit für diesen Zweck eingebrachten optischen Komponente 3 allenfalls auch ohnehin im Strahlengang vorhandene optische Elemente 17,2,39, etc. bzw. deren Rückreflexe genutzt werden. Eine OCT-Messung kann dabei im Sinne der vorliegenden Erfindung in einer speziellen Ausführungsform derart ausgebildet sein, dass mittels dieser, sowohl das optische Element 3, als auch das Objekt 4 vermessbar ist. In einer anderen Ausführungsform kann eine Interferometer-Einrichtung der OCT-Messung dabei derart ausgebildet sein, dass diese mehrere Referenzarme ausbildet, mittels welchen zum einen dezidiert ein Distanzbereich im Gebiet des optischen Elements 3 und zum anderen ein anderer Distanzbereich im Gebiet des Objekts 4, vorzugsweise gleichzeitig, vermessbar sind. In einer Ausführungsform kann die OCT-Messung alternativ auch mehrere, hierfür dezidierte Interferometer-Einrichtungen ausbilden.

In anderen Worten ist somit entsprechend der vorliegenden Erfindung der optische Pfad derart ausgebildet, dass eine Änderung der longitudinalen Lagen- oder Ortsinformation bzw. des longitudinalen Abstands sich mit Änderung der Strahlablenkung verändert. Dabei kann in einer Ausführungsform eine absolute, eindeutige Zuordnung eines Werts der Ablenkung zu einer Ortsinformation bzw. zu einem Abstand ausgebildet sein. In einer anderen Ausführungsform kann in einer wiederum anderen Ausführungsform können auch mehrere unterschiedliche Ortsinformationen oder Abstände mittels derselben Messstrahlung bestimmt werden - beispielsweise um damit Mehrdeutigkeiten der in der Ablenkungsbestimmung aufzulösen, eine spezielle (z.B. mehrkanalige) Ablenkungscodierung zu erzielen, oder bei mehrachsiger Strahlablenkung auch mehrere getrennte (insbesondere jeweils den Ablenkungsachsen zugeordnete) Änderungen der longitudinalen Ortsinformationen zu erfassen. In einer anderen Ausführungsform kann das optische Element auch derart ausgebildet sein, dass dieses in Strahldurchtrittsrichtung longitudinaler Richtung einen Schichtaufbau aufweist, welcher derart konfiguriert ist, dass in Abhängigkeit von der lateralen Position auf dem optischen Element, jeweils unterschiedliche Kodierungen mittels des Schichtaufbaus aufweist. In einer beispielhaften Ausführungsform kann etwa eine binäre Codierung mittels reflektivem Schichtbereich (=logisch 1) oder nichtreflektivem Schichtbereich (=logisch 0) einer jeweiligen lateralen Region ausbildet sein. Mehrere derartig unterschiedlich codierten Schichten übereinander können damit via OCT zu einem longitudinalen Codewort-Muster von hellen/dunklen Bereichen im Tiefenbild des Tomogramms ausgewertet werden, mit welchem die jeweiligen lateralen Positionen auf dem optischen Element eindeutig codiert werden können. Neben einem schichtweisen Laminieren des optischen Elements kann derartiges Codemuster aus mehreren Schichten von unterschiedlich reflektierenden, lateralen Bereichen z.B. auch mittels Lasergravur, Dotierung, etc. im optischen Element erzielt werden. Da die via OCT erfassbaren Reflektivitätsunterschiede hierbei durchaus im Bereich von Prozent oder noch deutlich darunter liegen können, kann das optische Element (auch beim Vorhandensein von mehreren Code-Schichten) dabei im Wesentlichen als transparent angesehen werden, womit z.B. auch dieselbe OCT-Strahlung auch für eine Vermessung eines Messobjekts genützt werden kann.

Entsprechend der vergleichsweise hohen longitudinalen Ortsauflösung einer OCT-Messung kann dabei eine erfindungsgemäß evaluierte Änderung einer Ortsinformation bzw. eines Abstand oder einer Codierung in seinen geometrischen Abmessungen gering gehalten werden, beispielsweise speziell auch in einen Bereich unter 10 mm oder unter 1 mm, oder etwa im Bereich von zehntel, hundertstel oder tausendstel Millimetern.

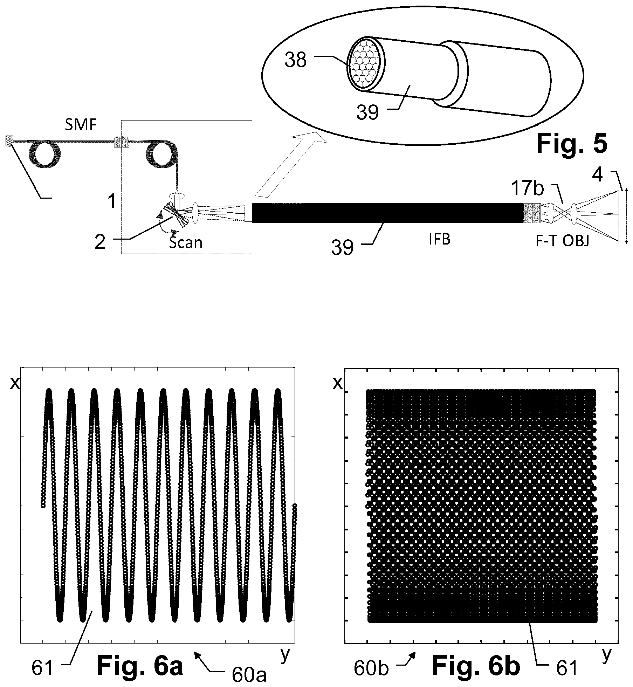

In dem in **Fig. 5** gezeigten Beispiel einer speziellen Ausführungsform einer Anwendung der vorliegenden Erfindung kann dabei - neben einer direkten weiteren Nutzung der abgelenkten optischen Arbeitsstrahlung auf dem Objekt 4 im klassischen Sinne - auch eine Weiterleitung des winkel- bzw. positions- abgelenkten Lichtstrahls durch einen Bildleiter 39 erfolgen. Der Bildleiter 39 kann beispielsweise auch als mehrdimensionaler Bildleiter ausgeführt sein, etwa in Form eines optischen Faser-Bündels oder durch andere Ausführungsformen von optischen Bildleiter 39. Dadurch kann beispielsweise bei einer optischen Messprobe mit Scan-Einrichtung die Ablenkungsmechanik 2 und die dazugehörige Elektronik, etc. räumlich von dem Emissionsbereich, in welchem die optische Messung am Messobjekt mittels der abgelenkten OCT-Strahlung stattfindet, getrennt werden. Damit kann insbesondere das messende Ende der Messprobe in seinen Abmessungen klein gehalten werden und es sind keine mechanischen und/oder elektrischen Verbindungen hin zum Ende der Mess-Probe erforderlich. Das abtastende Ende des Messkopfes kann in einer minimalen Ausführungsform beispielsweise auf den Bildleiter 39 mit einer allfälligen Optik 17b an dessen Ende reduziert werden. Dabei kann der Bildleiter 39 nicht nur steif, sondern optional sogar flexibel ausgebildet sein. Der Bildleiter 39 kann dazu beispielsweise in einem Mess-Stylus oder einer Mess-Sonde untergebracht sein, an dessen Ende eine Mikrooptik 17b, beispielsweise eine F-Theta-Optik oder ähnliches, das Bildleiterende auf ein Messobjekt 4 abbildet. Über eine Variation der Ablenkspiegelposition 2 an dem vom Messobjekt 4 entfernten Ende des Bildleiters 39, kann damit das Messobjekt von der OCT-Messeinrichtung 1 abgetastet werden.

Ein Interferogramm für die OCT-Messung kann in einer speziellen Ausführungsform auch durch Interferenz mit dem LO-Lichtfeld, das an der planpolierten Endfläche des Bildleiters 39 (IFB) zurückreflektiert wird, erzeugt werden. Dabei bildet sozusagen der Bildleiter 39, bzw. dessen Endfläche(n), das optische Element 3 der erfindungsgemäßen Ablenkungsbestimmung.

In **Fig. 6a** und **Fig. 6b** sind exemplarisch zwei Beispiele von Scan-Pfaden 60a und 60b auf einem Messobjekt gezeigt, mit welchen eine 3D-Erfassung eines Oberflächenprofils (und/oder eines Tomogramms von zumindest teilweise transparenten Objekten) erzielt werden kann. Der Scan-Pfad setzt sich dabei aus einer Folge von den mit Kreisen 61 bzw. 62 markierten Messpunkten zusammen. Entsprechend der vorliegenden Erfindung ist dabei bei jedem Messpunkt auf der Oberfläche nicht nur ein in Messstrahlrichtung longitudinaler Distanzwert bzw. ein Tomogramm dieses Messpunktes auf der Oberfläche des Messobjekts ermittelbar, sondern auch die jeweils zugehörigen, gezeigten x- und y-Koordinaten der lateralen Position des Messpunktes auf dem Messobjekt ermittelbar. Es können erfindungsgemäß also zumindest drei dimensionale Koordinaten für jeden der Messpunkte ermittelt werden, und dies mit einer hohen Messgenauigkeit und Messrate, da ein Bewegen der Ablenkeinrichtung schnell und/oder hochdynamisch erfolgen kann, insbesondere schneller und dynamischer als sich die Achsen einer Koordinatenmessmaschine bewegen können. Die gezeigten Pfade 60a und 60b sind dabei Beispiele mit welchen etwa Oberflächenprofile vermessen werden können.

In den gezeigten Beispielen kann die Auslenkung der Ablenkung beispielsweise in jeder Achse etwa +/-5 mm betragen. Im Beispiel von 60a kann dabei etwa eine Ablenkgeschwindigkeit der Ablenkeinheit in y-Richtung von etwa 5 Hz bei der PendelBewegung und einer Ablenkgeschwindigkeit der Ablenkeinheit in x-Richtung von etwa 5 mm/s erzielt werden. Im Beispiel von 60b kann dabei etwa eine Ablenkgeschwindigkeit der Ablenkeinheit in y-Richtung von etwa 15 Hz bei der PendelBewegung und einer Ablenkgeschwindigkeit der Ablenkeinheit in x-Richtung von etwa 2 mm/s erzielt werden. Dabei kann, neben einer zweidimensionalen optischen Ablenkeinheit, in einer Ausführungsform auch nur eine, vorzugsweise die schnellere, der Bewegungen durch eine, insbesondere eindimensionale, optische Ablenkeinheit für die Messstrahlung erfolgen, und die andere mit einem Bewegen des optischen Tastkopfes bzw. einer Maschinenachse erzielt werden. Selbst bei diesen hohen (oder noch höheren) Geschwindigkeiten kann dabei erfindungsgemäß die aktuelle Lage einer dabei genutzten MEM-Ablenkeinheit für jeden der Messpunkte ermittelt werden, und nicht lediglich von den Ansteuersignalen der MEM-Ablenkeinheit bestimmt werden.

Neben den gezeigten Beispielen von Scan-Pfaden 60a und 60b, welche primär zur Erfassung eines 3D-Oberflächenprofils mit einer konstanten Messrate ausgebildet sind, können aber auch andere, insbesondere vorgegeben Scan-Pfade mit der Ablenkeinheit abgefahren werden. Insbesondere kann dabei eine erfindungsgemäße Erfassung der aktuellen Ablenkung der Ablenkeinheit als Ist-Wert für einen Positionsregelkreis zur Ansteuerung der Ablenkeinheit genutzt werden.

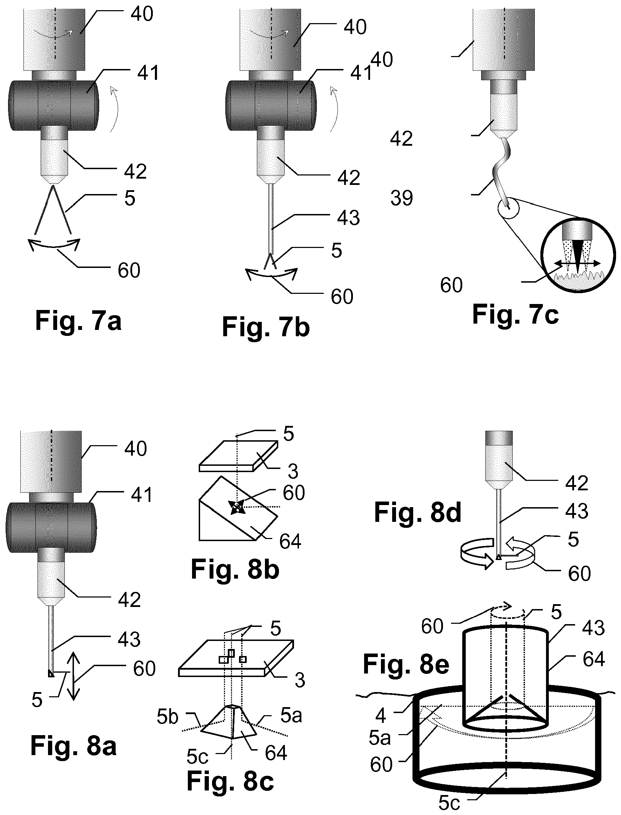

Fig. 7a zeigt ein Beispiel einer Ausführungsform eines Messkopfs 42 für ein Messgerät, mit welchem eine berührungslose Messung an einem Objekt erfolgen kann, bei welcher die Messstrahlung 5 von einer Strahlablenkeinheit 2 abgelenkt wird, oder in anderen Worten gescannt wird, wie dies der Strahlenfächer der Messstrahlung 5 und der Pfeil 60 symbolisiert.

Im Beispiel dieser Ausführungsform wird etwa von einem als Punktsensor ausgebildeter OCT-Sensor auf einer CMM-Maschine ausgegangen, bei welchem durch laterale Bewegung des OCT-Messtasters durch die CMM sein Messfeld von einem Punkt auf einen Pfad oder eine Fläche erweitert wird. Die damit erreichbare Messgeschwindigkeit der dabei ermittelten Punktwolke ist jedoch niedrig und primär durch die Bewegung der CMM-Maschine limitiert. Um ein derartiges Messverfahren bzw. eine derartige Messmaschine zu verbessern, wird entsprechend eines ersten Aspekts der Erfindung ein Übergang zu einem vergleichsweise schnelleren erfindungsgemäßen Scannen 60 der optischen Strahlung mittels einer optischen Ablenkeinheit 2 (z.B. einem bewegten Scann-Spiegel, etc.) bereitgestellt.

Jedoch kann sich selbst ohne Scannen, bei einem derartigen punktweisen Messmechanismus, aufgrund der vielfach beschränkten räumlichen Verhältnisse, insbesondere bei schwer zugänglichen Messobjekten, eine möglichst vollflächige Messung des Messobjekts schwierig bis unmöglich gestalten. Da somit die Limiten des Bauvolumens des Messtasters ohnehin schon erreicht oder überschritten sind, wäre ein zusätzlicher Einbau einer entsprechend positionsgenauen optischen Ablenkeinrichtung 2 an der Messspitze des Messtasters kaum möglich - womit eine Implementierung eines derartiger Scann-Spiegel Ansatzes in einen Messkopf 42 einer CMM-Maschine 40 kaum sinnvoll oder überhaupt machbar erscheint. Hierzu übliche, positionsgenaue Galvanometer, insbesondere mit entsprechend positionsgenauem Ablenkungs-Regelkreis, wäre hierfür - auch aus anderen technischen Überlegungenungeeignet oder unbefriedigend.

Baugrößenbedingt wäre allenfalls noch entsprechend eines weiteren Aspekts der Erfindung eine, auf entsprechend kleinen MEM-Spiegeln als Strahlablenkungseinheit basierende, scannende OCT möglich. Dabei kann sich beispielsweise ein durch elektrische Ansteuersignale bewegbarer, mikromechanischer Spiegel am Messkopf 42 befinden. Dieser Messkopf 42 kann dabei beispielsweise an einer beweglichen Achse einer entsprechenden Aufnahme einer Koordinatenmessmaschine 40 angebracht werden. Neben linear beweglichen Achsen kann diese z.B. auch Dreh- und/oder Schwenkachsen 41 aufweisen. Die eigentliche optische Messeinrichtung kann dabei zumindest teilweise oder auch vollständig im Messkopf 42 untergebracht sein, kann aber auch (zumindest teilweise) extern von diesem angeordnet sein, wobei das Messlicht zum Messkopf geführt wird, beispielsweise über eine optische Faser.

Ein derartiger Ansatz wäre aber für sich genommen in vielen Anwendungsfällen wohl auch noch nicht hinreichend, da bei derartigen MEM-Spiegeln keine hinreichend genaue Information über die tatsächliche Strahlablenkung der Ablenkeinheit 2 bekannt ist. Der oben dargelegte, komplexe Problemkreis lässt sich erfindungsgemäß lösen, wie dies bereits erläutert wurde, sodass eine hinreichend genaue Information über die tatsächliche Ablehnung der Ablenkeinheit - auch von winzigen MEM-Spiegeln - erzielbar ist, insbesondere zum Zeitpunkt der OCT-Vermessung des Messobjekts. Ein Beispiel hierfür ist in Fig. 7b gezeigt, bei welchem der Messkopf 42 mit einem entsprechenden Mess-Stylus ausgebildet ist, welcher allenfalls auch wechselbar ausgestaltet sein kann, beispielsweise in unterschiedlichen Längen, Formen, Messrichtungen, etc.

Da wie erwähnt bei einem OCT-Messtaster bei einer CMM, im Sinne einer gute Zugängigkeit zum Messobjekt, in vielen Fällen eine dünne Bauform angestrebt wird, wäre jedoch sogar zuvor genannter Ansatz mit einer Integration eines MEMS-Scannerspiegels am vorderen Ende des Tasters technisch sehr schwierig, und in seinem Resultat für etliche Anwendungsfälle immer noch nicht befriedigend oder optimal. Entsprechen eines weiterbildenden Aspekts der Erfindung kann in manchen Ausführungsformen eine Integration der Scanneinrichtung an der messobjektabgewandten Seite im Gehäuse des Messtaster 42 (oder gar außerhalb des eigentlichen Messtasters) angestrebt werden, was entsprechend eines weiteren Aspekts der Erfindung z.B. mit einem Image Fiber Bundle (IFB, oder auch Bildleiter) erzielbar ist, mittels welcher IFB die Fokusebene der Scanneinrichtung von einem hinteren Ende der IFB zu einem vorderen Ende der IFB übertragen wird. Zum Erzielen des gewünschten Messbereichs kann dabei beispielsweise eine F-Theta Optik am messobjektseitigen Ende des Faserbündels genutzt werden.

Vergleichbar mit der in Fig. 5 gezeigten, speziellen Ausführungsform kann beispielsweise eine vollflächige bzw. zeilenweise OCT-Messung durch den Bildleiter 39 (= Image Fiber Bundle - IFB) am entfernten Messobjekt 4 durchgeführt werden. In **Fig. 7c** zeigt ein Beispiel einer Ausführungsform einen Bildleiter 39 als messendes Ende des Messkopfes 42 an der CMM 40, an dessen Ende eine laterale Scann-Bewegung 60 - je nach Ausführungsform in ein oder zwei Dimensionen - der Messstrahlung durchgeführt werden kann. Die gezeigte Form des Bildleiters 39 soll andeuten, dass dieser in einer Ausführungsform auch flexibel ausgestaltet sein kann, in einer anderen Ausführungsform kann dieser aber auch steif (z.B. ähnlich wie in Fig. 7b gezeigt) ausgebildet sein. Die OCT-Messeinrichtung 1 und/oder die Ablenkeinheit 2 kann dabei entweder im Messkopf 42, oder auch extern davon angeordnet sein, z.B. indem der Bildleiter 39 entsprechend durch die Messmaschine geführt wird.

Dabei ist, bei einer hochschnellen Scanngeschwindigkeit, z.B. im Bereich von mehreren kHz oder darüber, eine genaue Lokalisation der lateralen Lage, an welcher das Licht im IFB eingekoppelt wird, notwendig. Dabei ist die Kenntnis der lateralen Lage mit einer, dem IFB 39 entsprechenden Genauigkeit erforderlich, welchen entsprechend der üblichen Abmessungen von Lichtleitern meist vergleichsweise hoch ist. Daher muss in der Scanneinrichtung ein entsprechend genauer Winkelencoder mit integriert werden, denn nur eine mit einem Winkelencoder versehene Scanneinrichtung ermöglicht eine hinreichend thermisch und mechanisch stabile und genaue vollflächige OCT-Messung.

In vielen Anwendungen muss die Scannereinrichtung zur Strahlablenkung zweidimensional ausgebildet sein, um einen 3D-Scan auf dem Objekt durchzuführen, womit entsprechend auch die Messung der Strahlablenkung durch den Winkelencoder 2-dimensional codiert sein muss.

Die Bewegung des Scan-Spiegels kann dabei verschiedene Bahnen ablaufen. Im Prinzip könnte diese Bahnen entweder in einer ersten Variante definiert vorgegeben werde, sodass die Messstrahlung entlang einer vordefinierten Bahn geführt wird, etwa durch einen Regelkreis in der Scannereinrichtung, oder in einer zweiten Variante nicht zwingend exakt vorgegeben sein, sondern auch zufällig (randomized) ablaufen, solange deren Position zu den Messzeitpunkten durch den Winkelencoder hinreichend genau und zuverlässig bekannt ist, beispielsweise mit einer ein- oder zweiachsigen Oszillation, beispielsweise auch in einer Resonanz der Ablenkeinheit.

Der Bildleiter 39 kann dabei in unterschiedlicher Weise angeordnet und ausgebildet sein. Es kann z.B. an der Einkoppelseite eine lineare bzw. 1-dimensionale Form vorliegen, während an der Auskoppelseite die Fasern in einer runden Form angeordnet sein könnten. Eine Zuordnung zwischen der Einkoppelposition und dem Auskoppelort am anderen Ende des Bildleiters kann dabei z.B. auch vorab kalibriert werden, und etwa in einer LUT (look-up-table) abgespeichert werden, insbesondere falls dieser Zusammenhang nicht in einfachster Weise strikt linear ist, was insbesondere bei Faserbündeln auftreten kann. Wenn diese Zuordnung bekannt ist, kann der Benutzer dann beispielsweise verschiedene zeitlich ablaufende Auskoppelformen selektieren bzw. Pfade vorgeben, welche dann entsprechend der Zuordnung vom Ablenkspiegel auf der Einkoppelseite abgefahren werden.

Die in Fig. 2a gezeigte Verzögerungsplatte - oder ein entsprechend wirkendes optisches Element 3 - kann dabei grundsätzlich an einer beliebigen Stelle bei oder nach der Strahlablenkung angeordnet sein, um einen ortsdistanzabhängigen Rückreflex zu erhalten, welcher erfindungsgemäß durch OCT-Messung entsprechend ausgewertet werden kann um daraus die Ablenkung der Ablenkeinheit 2 zu ermitteln. Dabei kann die Verzögerungsplatte beispielsweise auch wahlweise auf der Ein- oder Auskoppelseite des Bildleiters angebracht werden. In einer anderen erfindungsgemäßen Ausführungsform kann beispielsweise auch die Ein- und/oder Auskoppelfläche des Bildleiters 39 genutzt werden, um diesen Rückreflex für eine OCT-Scannablenkungswinkelbestimmung zu erzielen. Beispielsweise können die Fasern des Bildleiters 39 unterschiedlich lang ausgebildet sein oder es kann die Ein- und/oder Auskoppelfläche des Bildleiters 39 entsprechend geometrisch geformt ausgebildet sein.

In einer anderen speziellen Ausführungsform von **Fig. 8a** kann bei einer erfindungsgemäßen OCT-Messung eine zusätzliche fixe Strahlablenkung der OCT-Messstrahlung 5 am Ende der Optik eines Mess-Stylus 43 erfolgen, etwa über ein Prisma oder ein anderes optisches Element mit ablenkender Wirkung. Mit einer derartigen fixen Ablenkung an der Auskoppelstelle der Messstrahlung hin zum Messobjekt, beispielsweise um 90°, kann dabei auch eine Messung um eine Ecke erfolgen. Die Scan-Bewegungsrichtung 60 wird dabei ebenfalls umgelenkt.

In **Fig. 8b** ist dabei nochmals eine schematische Detailansicht mit einem Prismas 64 zur 90°-Umlenkung der entsprechend in die Richtungen 60 ablenkbaren Messstrahlung 5 gezeigt. Erfindungsgemäß ist auch hier eine Lage 60 der Messstrahlung mit einer OCT-Messung am optischen Element 3 ermittelbar.

Speziell in Zusammenspiel mit der Scann Einrichtung lassen sich dabei völlig neue Messtaster-Konzepte realisieren. Beispielswiese kann mit einem oder mehreren entsprechend ausgebildeten Prisma (o.ä.) welche nur einen Teil des mit der Scann-Einrichtung abdeckbaren Auskoppelbereichs abdecken, eine Umschaltung der Messrichtung, beispielsweise zwischen 0° (oder orthogonal zur Auskoppelfläche bei einer Scan-Richtung im Bereich 5a und einer 90° dazu liegenden Messrichtung im Bereich 5b erzielt werden. Dabei kann erfindungsgemäß mit Bekanntsein der Ablenkung exakt zwischen diesen Richtungen unterschieden werden, als nicht nur die Ablenkung in der jeweiligen Richtung, sondern auch die Richtung an sich ermittelt werden. Dabei kann die erfindungsgemäße Ablenkungsbestimmung unter Einbezug von Rückreflexen im oder vor dem Einkoppel-Bereich sondern auch unter Einbezug von Rückreflexen im Auskoppelbereich, also speziell auch von Rückreflexen am Ablenkprisma ermittelt werden. Die schematische Detailansicht eines anderen Beispiels einer zusätzlichen, fixen Ablenkung 64 ist in **Fig. 8c** dargestellt. Darin ist ein optisches Ablenkelement 64 beispielsweise als Pyramidenstumpf ausgebildet. Entsprechend der, wie beschrieben anhand von OCT-Messungen am Element 3 ermittelbaren Lage der Ablenkung der Messstrahlung 5, wird die Messstrahlung 5 dabei beispielsweise in eine von vier Richtungen 5a,5b orthogonal zum Stylus 43 emittiert, womit der Stylus wahlweise in vier, (bei mehreckiger Ausbildung des pyramidenförmigen verspiegelten Ablenkelements 64 auch entsprechend andere) substantiell orthogonale Richtungen 5a, 5b (nur zwei dieser Richtungen sind hier sichtbar) messen kann. Eine Wahl der Richtung kann dabei mittels Scann-Einrichtung erfolgen. In der gezeigten Ausführungsform mit einem Pyramidenstumpf kann optional auch eine zusätzliche longitudinale Messung 5c erfolgen, indem die Messstrahlung von der Scann-Einheit entsprechend ausgerichtet wird.

In anderen Ausführungsformen kann die Ablenkung am Mess-Stylus 43 auch für andere Richtungen als 90° ausgebildet sein, speziell kann die Ablenkung auch abhängig von der Lage 60 ausgebildet werden, beispielsweise um unterschiedliche Scan-Bereich zu realisieren, wie etwa eine wählbare Messrichtung in Kugelkalotten-, Hemisphären- oder Dom-Form, etc.

In einer beispielhaften Ausführungsform von **Fig. 8d** und **Fig. 8e** kann ein Scan entlang einer Kreisbahn (optional auch in einem Faserbündel) in Kombination mit einer konischen Strahlablenkung an der Auskoppelstelle hin zum Messobjekt 4 erfolgen. Damit kann eine ringförmige 90° Ablenkung der Messstrahlung 5 ausgebildet werden, um z.B. Innenrohre oder Bohrungen als Messobjekt 4 zu vermessen. Dabei ist mit einer erfindungsgemäßen Ermittlung der Lage der Strahlablenkung, jene radiale Winkelrichtung bekannt, in welche aktuell gemessen wird. Im gezeigten Beispiel von Fig. 8e wird eine Bohrung 4 in ihrem Kreisquerschnitt entlang des Umfangs vollständig vermessen. Die Scanner-Ablenkung kann dazu beispielsweise wie angedeutet im Wesentlichen kreisförmig ausgebildet sein. Dabei kann erfindungsgemäß eine absolute oder relative Winkelorientierung des aufgenommenen Profils entlang des Umfangs mit der erfindungsgemäßen OCT-Messung der Scanner-Lage (und entsprechend bekannter oder ermittelbarer geometrischer Transformation der fixen Ablenkung 64) ermittelt werden.

Wird zusätzlich eine Ablenkposition an der Auskoppelfläche bereitgestellt, an welcher keine (oder eine andere) Ablenkung auftritt (z.B. wie gezeigt dass im Zentrum, etwa in einer Ruhestellung des Scanners keine Ablenkung durch die Tastkopfspitze 64 erfolgt, z.B. mit einer Bohrung, einer abgeflachten Spitze, etc.), so kann mit einem einzigen Messtaster sowohl ein Querschnittsprofil über 5a als auch eine über 5c Tiefe einer Bohrung 4 (oder einer anderen Einbuchtung) bestimmt werden, was beispielsweise einen Tastkopfwechsel ersparen kann.

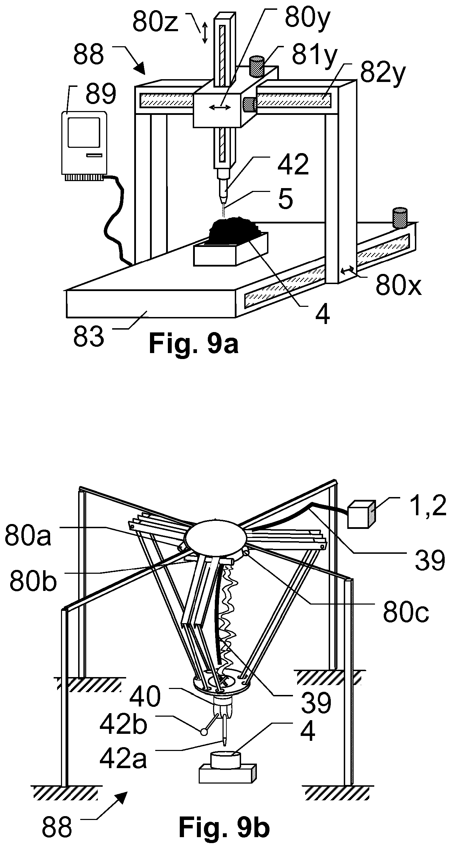

**Fig. 9a** zeigt ein Beispiel einer CMM 88 mit einem OCTbasierten Messkopf 42, beispielsweise wie vorgängig beschrieben, bei welchem eine optische Ablenkung der Messstrahlung 5 in ein oder zwei Dimensionen durchführbar ist.

Mit dieser Messstrahlung 5 kann das Objekt 4 auf dem Messtisch 83 punktweise, entlang eines Pfades oder flächig vermessen werden, wobei zumindest ein Teil der Bewegung der Messstrahlung 5 durch eine optische Ablenkeinheit für die Messstrahlung 5 bewirkt wird. Die Bewegungsachsen 80x, 80y und 80z können dabei vorzugsweise mit einem jeweiligen Antrieb (z.B. 81y) und einer Positionsmesseinrichtung (z.B. 82y) ausgestattet sein. Eine Auswerteeinheit 89, z.B. ein Digitalrechner oder Messmaschinencontroller ist dabei derart ausgebildet, um mit der CMM 88 das Objekt 4, vorzugsweise zumindest teilweise automatisch, in seiner Geometrie und/oder in anderen physikalischen Eigenschaften zu vermessen. Speziell kann dabei eine drei dimensionale Vermessung einer Oberfläche des Objekts 4 erfolgen.

Erfindungsgemäß kann dieses, zumindest für jeweilige Teilabschnitte der Oberfläche, mit einem lateralen oder angularen Scannen einer optischen Messstrahlung durch eine Ablenkeinheit erfolgen, wobei die Lage bzw. Richtung der gescannten Strahlung mittels eine OCT-Messung in longitudinaler Richtung entlang der Messstrahlung an einem optischen Element im Strahlengang erfolgt. Speziell kann dabei das optische Element entsprechend derart ausgebildet sein, dass dieses einen, von der lateralen oder angularen Ablenkung (insbesondere eindeutig) abhängigen Rückreflex aufweist, welcher in der longitudinalen OCT-Messung zu unterscheidbaren Ergebnissen führt.

**Fig. 9b** zeigt ein Beispiel einer anderen Ausführungsform einer CMM 88, bei welcher die OCT-Messung über einen Bildleiter 39 an das messende Ende des Messkopfes 42a geführt wird. Dabei erfolgt ein beim Einkoppeln der Messstrahlung des OCT-Messaufbaus 1 ein Ablenken 2 der Messstrahlung auf der Einkoppelfläche des Bildleiters 39. Dieses Ablenken 2 ergibt sich einen linearen oder flächigen Scan-Bereich am Messobjekt 4, welcher Scan-Bereich durch Bewegung der Bewegungsachsen 80a, 80b, 80c auf dem Objekt verschiebbar ist.

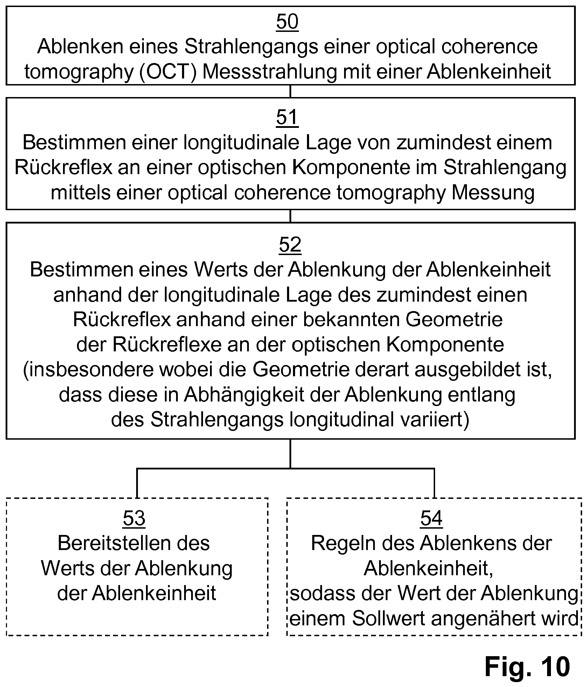

**Fig. 10** zeigt ein Blockdiagramm einer Ausführungsform eines Verfahrens oder einer Methode zur Ablenkungsbestimmung einer Ablenkeinheit 2 mit einer OCT-Messeinrichtung 1.

In Block 50 erfolgt ein gesteuert variierbares Ablenken eines Strahlengangs einer optical coherence tomography (OCT) Messstrahlung mit einer Ablenkeinheit 2 für optische Strahlung.

In Block 51 erfolgt ein Bestimmen einer longitudinalen Lage von zumindest einem Rückreflex an einer optischen Komponente im Strahlengang der OCT-Messtrahlung mittels einer optical coherence tomography Messung, mit welchem entlang des Strahlengangs eine longitudinale Lage des Rückreflexes ermittelt wird.

In Block 52 erfolgt ein Bestimmen eines Werts der Ablenkung der Ablenkeinheit anhand der longitudinale Lage des zumindest einen Rückreflex entlang des Strahlengangs. Dieses kann insbesondere anhand einer bekannten Abhängigkeit der Geometrie der Rückreflexe an der optischen Komponente von der Ablenkung erfolgen. Dabei kann insbesondere die optische Komponente speziell derart ausgebildet sein, dass die longitudinale Lage in Abhängigkeit der Ablenkung variiert, insbesondere wobei jeweils eine eindeutige Zuordnung von einer oder mehrere der longitudinalen Lagen zu einem Wert der Ablenkung besteht.

In Block 53 erfolgt dann optional ein Bereitstellen des ermittelten, aktuellen Werts der Ablenkung der Ablenkeinheit, beispielsweise in Form einer Längen- oder Winkel-Angabe, welche eine Position jener Stelle auf dem Objekt charakterisiert, welche von der OCT-Messstrahlung beleuchtet wird.

In Block 54 erfolgt ebenfalls optional ein Regeln des Ablenkens der Ablenkeinheit, sodass der Wert der Ablenkung einem Sollwert angenähert wird, beispielsweise mit einem Regelkreis, welcher ein Ansteuersignal für die Ablenkeinheit 2 bereitstellt, sodass die Ablenkung dem vorgegebenen Sollwert angenähert wird.

Zusammenfassend kann ein spezieller Aspekt von vielen der hier angeführten Ausführungsformen der Erfindung welche eine scannende OCT-Vermessung eines Objekts 4 betreffen, darin gesehen werden, dass ein Detektieren von unterschiedlichen, ablenkwinkelabhängigen Distanzwerten 35,36 an einem optischen Element 3 im (Mess-)Strahlengang 5 eines von einer Ablenkeinheit 2 ablenkbaren Strahlengangs 5 mittels einer OCT-Messung 1 erfolgt. Mit Bekanntsein dieser Distanzwerte 35,36 kann einem zweiten Entfernungsmesswert der OCT-Messung an einem Messobjekt 4, eine genaue laterale Position der Ablenkung 2 zugeordnet werden. Die Erzeugung des hierbei relevanten Distanzsignals 35,36 kann beispielsweise mittels eines, in Ausbreitungsrichtung lateral bzw. winkelabhängig in seiner Dicke abgestuften, teilweise (insbesondere großteils) transmittiven optischen Elements 3 im abgelenkten OCT-Strahlengang 5 bereitgestellt werden, welche entsprechende, von der OCT-Messung erfassbare schwache Rückreflexe am oder im optischen Element 3 bereitstellt.

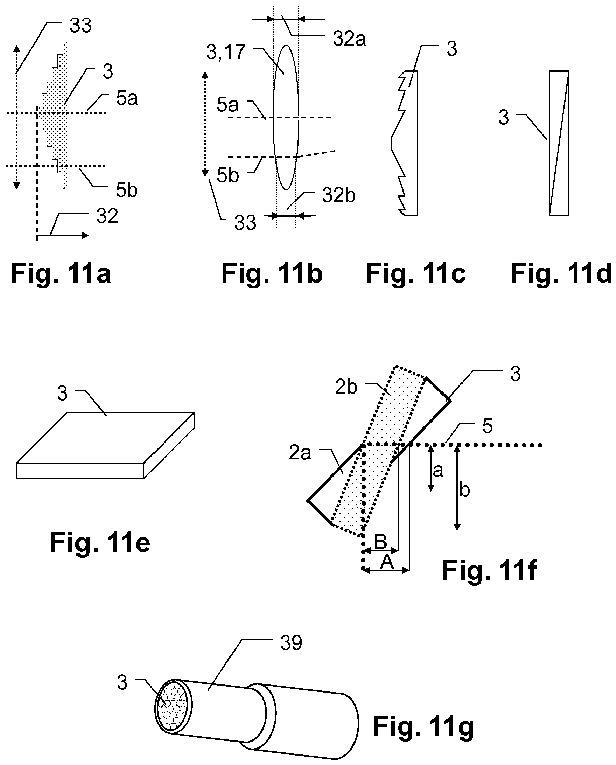

**Fig. 11a** bis **Fig. 11h** zeigen nicht abschließend, einige weitere beispielhafte Ausführungsformen von optischen Elementen 3, welche für die vorliegende Erfindung ausgebildet sind.

Neben obiger Ausführungsform aus Fig. 2a, welche nochmals in **Fig. 11a** gezeigt ist, mit einer Anordnung von einer Verzögerungsplatte (bzw. Reflektionsplatte, RP) und einer Linse (z.B. einer Objektiv-Linse), ist in einer anderen Ausführungsform auch eine Vereinigung oder Integration der Merkmale der beiden besagten optischen Komponenten in einem einzigen Element, insbesondere einem diffraktiven Element) anwendbar. Entsprechende optische Elemente, Beschichtungen können hierfür dezidiert entwickelt werden, bzw. können allenfalls auch bereits im Strahlengang ohnehin vorhandene Elemente genutzt oder allenfalls entsprechend modifiziert werden, um die von der Erfindung genutzten, (schwachen) RückReflexe des durch den abgelenkten Strahlengang transmittierten optischen Elements zu erzielen. Die in diesem Beispiel gezeigte, diskrete Stufung der Rückreflexe in ihrer Strahl-Longitudinalen Richtung ist hierbei eine mögliche Ausführungsform. Dabei kann die Stufung in einer Ausführungsform für jede Ablenkung einen absolut eindeutigen Entfernungswert einnehmen, in einer anderen Ausführungsform einen relativ in Bezug auf einen oder mehrere andere Reflexe eindeutigen Wert einnehmen. In einer wiederum anderen Ausführungsform kann dieser in Bezug auf die Ablenkung auch keinen eindeutigen Wert einnehmen, sondern etwa einen relativkodierten Wert in Bezug auf seine Umgebung, beispielsweise einen Inkrementalcodierung, etc. Auch eine Ausführungsform mit einer mehrwertigen Codierung in der longitudinalen Tiefe ist eine weitere erfindungsgemäße Ausführungsform. Eine derartige Codierung kann dabei eindimensional oder auch Zweidimensional über die Ablenkpositionen auf der Oberfläche des optischen Elements 3 erfolgen.

In **Fig. 11b** ist dabei eine Linse als optisches Element 3 genutzt, welche allenfalls mit entsprechenden Beschichtungen ausgebildet sein kann um Rückreflexe zu erzielen, welche sich vorteilhaft für eine Erfassung mit dem konkret eingesetzten OCT-Messverfahren eignen. Bei einer Zementierung von mehreren Linsen (oder anderen optischen Elementen) kann auch ein Reflex an deren Übergang genutzt werden.

In einem in **Fig. 11c** gezeigten Beispiel einer Ausführungsform kann unter anderem im Sinne der Erfindung etwa eine Fresnel-Linse als gestuftes und zugleich beugendes optisches Element 3 zum Einsatz kommen.

In **Fig. 110d** ist das optische Element als Platte ausgebildet, welche abhängig von der lateralen Position auf der Platte, Reflexe in unterschiedlichen Tiefen aufweist. Neben einer Verwendung einer Keil-Form (Wedges), können derartige, in der Plattendicke unterschiedlich lokalisierte Reflexe, beispielsweise auch mit einer Verkittung oder Zementierung von mehreren Elementen und Nutzung derer Schnittstellen-Reflexionen erzielt werden. Auch eine gezielte Einbringung von Fehlstellen in das transparente Material des optischen Elements, z.B. mit Lasergravur, Dotierung, Diffusion, gezielter Verunreinigung oder einer anderen Art kann zur Generierung definierter Rückreflexe genutzt werden. Neben der gezeigten linearen Abstufung der optischen Weglänge bis zum Rückreflex, kann auch ein quasi-kontinuierlicher oder auch ein gestufter oder treppenförmiger Verlauf angewandt werden, je nach Anwendung in einer Dimension oder zweidimensional auf einer Fläche.

Mit der tomographischen OCT-Messung entsprechend der Erfindung kann auch eine Ausführungsform mit mehr als einem Rückreflex für eine laterale Position auf dem optischen Element ausgebildet werden. Beispielsweise mit einer Nutzung von zwei OCT-Vermessbaren Reflexen, deren bekannter, relativer Abstand zueinander eine Codierung der lateralen Position auf dem optischen Element bereitstellt. In einem anderen Beispiel kann aber auch eine mehrwertige Codierung an einer lateralen Position durch mehrere Reflexionsstellen in unterschiedlicher longitudinaler Tiefe erfolgen, welche zusammen ein Codewort bilden, dessen Auswertung die laterale Position bestimmbar macht, beispielsweise als Absolutcode, in einer jeweils lokal absoluten Codierung, als Inkrementalcode oder als Mischform von Absolut- und Inkrementalcode.

Ein zweidimensionales Beispiel ist in **Fig. 11e** gezeigt, als eine Ausführungsform, bei welcher eine zweidimensionale Verzögerungsplatte angewandt wird, bei welcher abhängig von der lateralen Position auf der Platte, in der Plattendicke in unterschiedlichen tiefen schwache Rückreflexe für eine transmittierende optische Strahlung ausgebildet sind, welche eine von einer OCT-Messung erfassbare Intensität aufweisen. Insbesondere, da die Rückreflexe für eine Erfassung mittels OCT-Messung nur eine geringe Intensität aufweisen müssen, beeinträchtigen selbst mehrere derartiger Rückreflexionen die optische Strahlung, welche das optische Element transmittiert, nur derart geringfügig, dass mittels dieser das Objekt immer noch hinreichend vermessbar ist.

In einer speziellen Ausführungsform, wie in **Fig. 11f** illustriert, kann dabei etwa auch ein zur Erzielung der Strahlablenkung bewegtes optisches Element (wie z.B. ein Spiegel der ein Prisma) genutzt werden um ablenkungsabhängig in ihrer strahl-longitudinalen Position sich verändernde Reflexionen der OCT-Stahlung bereitzustellen. Insbesondere kann dabei das strahlablenkende optische Element derart ausgebildet sein, dass der optische Pfad, welchen der Strahl im Spiegel-Glas zurücklegt, winkelabhängig unterschiedlich lang ausgebildet ist. Beispielsweise kann also etwa ein Pfad zwischen einem Eintritts- und einem Austritts-Reflex an einem strahlablenkenden Spiegel oder Prisma oder ein Pfad zwischen Ein- oder Austritt und einer Reflexionsebene ausgebildet sein.

**Fig. 11g** zeigt ein Beispiel einer bereits erwähnten Nutzung von Abstufungen an der Ein- und/oder Auskoppelfläche eines Bildleiters 39, beispielsweise durch unterschiedlich lange Einzelfasern, einen entsprechend geformten Schliff des Faser-Endes, etc.

### Patentansprüche

1.  Optisches System (1), insbesondere ein OCT-Scanner, mit

    einer Optischen Kohärenz Tomographie-, OCT- , Messeinrichtung und
    einer Strahlablenkeinheit (2) zur lateralen Positions-und/oder Winkelablenkung eines Strahlengangs der OCT-Messeinrichtung,
    wobei

- sich im Strahlengang eine optische Komponente (3) befindet, welche derart ausgebildet ist, dass in Abhängigkeit von der lateralen Position des abgelenkten Strahlengangs ein Rückreflex der optischen Komponente in seiner longitudinalen Lage entlang des Strahlengangs unterschiedlich ausgestaltet ist, und
- das optische System eine Auswerteeinheit (15) aufweist, welche derart ausgebildet ist, dass mit dem Strahlengang einer OCT-Messung ein Wert der lateralen Positions- und/oder Winkelablenkung der Strahlablenkeinheit anhand einer von der OCT-Messeinrichtung bestimmten longitudinalen Lage des Rückreflex an der optischen Komponente während der OCT-Messung bestimmt wird, und sowohl das Bestimmen der Positions- und/oder Winkelablenkung der Strahlablenkeinheit als auch ein optisches Vermessen eines Messobjekts (4) mit derselben OCT-Strahlung erfolgt und
- die optische Komponente nach der Strahlablenkeinheit im Strahlengang angeordnet ist und die optische Komponente so angeordnet und ausgestaltet ist, dass die optische Komponente vom Strahlengang transmittiert wird.

2. Optisches System (1) nach Anspruch 1, **dadurch gekennzeichnet, dass** die optische Komponente so angeordnet und ausgestaltet ist, dass die optische Komponente vom Strahlengang zu mindestens 80% oder 90% oder mehr transmittiert wird.

3. Optisches System (1) nach zumindest einem der Ansprüche 1 oder 2, **dadurch gekennzeichnet, dass** die optische Komponente derart ausgebildet ist, dass diese an unterschiedlichen lateralen Positionen auf der optischen Komponente jeweils einen Rückreflex aufweist, welcher in einer, im Wesentlichen orthogonal zur Lateralrichtung liegenden longitudinalen Lage, eine unterschiedliche OCT-Messdistanz aufweist, insbesondere wobei ein bekannter Zusammenhang zwischen lateraler Position und longitudinaler Lage gegeben ist.

4. Optisches System (1) nach zumindest einem der Ansprüche 1 bis 3, **dadurch gekennzeichnet, dass** eine bereits für einen anderen Zweck vorhandene optische Komponente im Strahlengang, als die optische Komponente zur Erzeugung des Rückreflexes ausgebildet ist.

5. Optisches System (1) nach zumindest einem der Ansprüche 1 bis 4, **dadurch gekennzeichnet, dass** der Strahlengang von der Ablenkeinheit auf einer Einkoppelfläche eines Bildleiters lateral abgelenkt wird, und über den Bildleiter an einer, mit einer Stelle auf der Einkoppelfläche korrespondierenden Stelle an einer Auskoppelfläche des Bildleiters, hin zu einem Messobjekt ausgekoppelt wird.

6. Optisches System (1) nach Anspruch 5, **dadurch gekennzeichnet, dass** eine Ein- und/oder Auskoppelfläche des Bildleiters einen Rückreflex für die OCT-Messung der Position- und/oder Winkelablenkung bereitstellen.

7. Optisches System (1) nach zumindest einem der Ansprüche 1 bis 6, **dadurch gekennzeichnet, dass** die Positions- und/oder Winkelablenkung des Strahlengangs durch eine bewegliche, reflektierende Fläche erfolgt, insbesondere wobei die reflektierende Fläche als mikroelektromechanische, MEM- , Spiegel-Ablenkeinheit ausgebildet ist.

8. Optisches System (1) nach Anspruch 7, **dadurch gekennzeichnet, dass** die optische Komponente, welche den Rückreflex für die OCT-Messung bereitstellt, durch einen Teil der Strahlablenkeinheit ausbildet wird, insbesondere als eine zumindest teilweise reflektierende Fläche der Strahlablenkeinheit.

9. Optisches System (1) nach zumindest einem der Ansprüche 1 bis 8, **dadurch gekennzeichnet, dass** das optische System als ein optisches Oberflächen-Messsystem in Form eines CMM-Tastkopfs, für eine Koordinatenmessmaschine, CMM , ausgebildet ist, welcher eine Vermessung in Form eines optischen Scannens von Oberflächen eines Messobjekts mittels der OCT-Messung bereitstellt, insbesondere wobei der CMM-Tastkopf einen Bildleiter für den Strahlengang der OCT-Messung aufweist.

10. Koordinatenmessmaschine (CMM) mit einem optischen System (1) nach zumindest einem der Ansprüche 1 bis 9.

11. Verfahren zur Bestimmung eines Werts einer lateralen Positions-oder Winkelablenkung einer Strahlablenkeinheit (2)in einem optischen System, wobei mittels einer Optischen Kohärenz Tomographie, OCT-, Messung ein Ermitteln von zumindest einer longitudinalen Lage von zumindest einem Rückreflex an einer optischen Komponente (3) im Strahlengang einer, durch die Strahlablenkeinheit abgelenkten Messstrahlen der OCT-Messung erfolgt, und anhand der ermittelten longitudinalen Lage des Rückreflexes ein Bestimmen des Werts der lateralen Positions-oder Winkelablenkung der Strahlablenkeinheit in dem durch die Strahlablenkeinheit abgelenkten Strahlengang der OCT-Messung während der OCT-Messung erfolgt, und sowohl das Bestimmen der Positions- und/oder Winkelablenkung der Strahlablenkeinheit als auch ein optisches Vermessen eines Messobjekts (4) mit derselben OCT-Strahlung erfolgt, wobei die optische Komponente nach der Strahlablenkeinheit im Strahlengang angeordnet ist und die optische Komponente von der Messstrahlung transmittiert wird und die optische Komponente derart ausgebildet ist, dass in Abhängigkeit von der lateralen Position des abgelenkten Strahlengangs der Rückreflex der optischen Komponente in seiner longitudinalen Lage entlang des Strahlengangs unterschiedlich ausgestaltet ist.

12. Verfahren nach Anspruch 11, **dadurch gekennzeichnet, dass** das Bestimmen des Werts der lateralen Positions- oder Winkelablenkung der Strahlablenkeinheit anhand einer, insbesondere bekannten, Beziehung zwischen der ermittelten longitudinalen Lage des Rückreflex an der optischen Komponente zu der lateralen Position der abgelenkten Messstrahlung auf der optischen Komponente erfolgt.

13. Verfahren nach zumindest einem der Ansprüche 11 oder 12, **dadurch gekennzeichnet, dass** die optische Komponente von der Messstrahlung zu mindesten 80%, 90% oder mehr transmittiert wird.

14. Verfahren nach zumindest einem der Ansprüche 11 bis 13, **dadurch gekennzeichnet, dass** die optische Komponente eine, insbesondere in bekannter Weise, von einer lateralen Position der optischen Messstrahlung auf der optischen Komponente abhängige, unterschiedliche longitudinale Lage des Rückreflex aufweist.

15. Methode zur Ablenkungsbestimmung in einem Tastkopf eines Koordinatenmessgeräts, welcher für eine lateral scannenden OCT-Messung einer Oberfläche eines Messobjekts ausgebildet ist, bei welchem ein Ablenkungswert einer Messstrahlung der OCT-Messung nach einem Verfahren nach zumindest einem der Ansprüche 11 bis 14 ermittelt wird.

## Claims

1. Optical system (1), in particular an OCT scanner, comprising

   an optical coherence tomography, OCT-, measuring device and
   a beam deflection unit for laterally deflecting the position and/or angle of a beam path of the OCT measuring device,
   wherein

   - there is an optical component in the beam path, said optical component being embodied in such a way that a back-reflection of the optical component has a different configuration in terms of its longitudinal location along the beam path depending on the lateral position of the deflected beam path, and
   - the optical system comprises an evaluation unit which is embodied in such a way that a value of the lateral position and/or angle deflection of the beam deflection unit is determined on the basis of a longitudinal location of the back-reflection at the optical component determined during the OCT measuring, and the determination of the position and/or angle deflection of the deflection unit as well as an optical measuring of a test object is done with the same OCT-radiation and the optical component is arranged in the beam path downstream of the beam deflection unit and the optical component is arranged and embodied in such a way that the optical component is transmitted by the beam path.

2. Optical system (1) according to Claim 1, **characterized in that** the optical component is arranged and embodied in such a way that the optical component is transmitted by the beam path at at least 80% or 90% or more.

3. Optical system (1) according to at least one of Claims 1 and 2, **characterized in that** the optical component is embodied in such a way that the latter in each case has a back-reflection at different lateral positions on the optical component, said back-reflection having a different OCT measuring distance in a longitudinal location lying substantially orthogonal to the lateral direction, in particular wherein there is a known relationship between lateral position and longitudinal location.

4. Optical system (1) according to at least one of Claims 1 to 3, **characterized in that** an optical component that is already present in the beam path for another purpose as the optical component is embodied to produce the back-reflection.

5. Optical system (1) according to at least one of Claims 1 to 4, **characterized in that** the beam path is laterally deflected by the deflection unit to an input coupling area of a light guide and, via the light guide, output coupled toward a test object to a point at the output coupling area of the light guide that corresponds to a point on the input coupling area.

6. Optical system (1) according to Claim 5, **characterized in that**
an input and/or output coupling area of the light guide provides a back-reflection for the OCT measurement of the position and/or angle deflection.

7. Optical system (1) according to at least one of Claims 1 to 6, **characterized in that** the position and/or angle deflection of the beam path is implemented by a movable, reflecting area, in particular wherein the reflecting area is embodied as a micro-electromechanical, MEM-, mirror deflection unit.

8. Optical system (1) according to Claim 7, **characterized in that** the optical component that provides the back-reflection for the OCT measurement is formed by part of the beam deflection unit, in particular as an at least partly reflecting area of the beam deflection unit.

9. Optical system (1) according to at least one of Claims 1 to 8, **characterized in that** the optical system is embodied as an optical surface measuring system on a coordinate measuring machine, CMM, in particular as a CMM probe head, which provides a measurement in the form of optically scanning surfaces of a test object, in particular by means of the OCT measurement, specifically wherein the CMM probe head has a light guide for the beam path of the OCT measurement.

10. Coordinate measuring machine (CMM) with an optical system (1) according to at least one of claims 1 to 9.

11. Method for determining a value of a lateral position or angle deflection of a beam deflection unit in an optical system, wherein
an optical coherence tomography, OCT-, measurement is used to ascertain at least one longitudinal location of at least one back-reflection at an optical component in the beam path of measurement radiation, deflected by the beam deflection unit, of the OCT measurement, and the value of the lateral position or angle deflection of the beam deflection unit is determined on the basis of the ascertained longitudinal location of the back-reflection during the OCT measuring,
and the determination of the position and/or angle deflection of the deflection unit as well as an optical measuring of a test object is done with the same OCT-radiation and the optical component is arranged in the beam path downstream of the beam deflection unit and the optical component is arranged and designed in such a way that the optical component is transmitted by the measuring radiation and the optical component being embodied in such a way that a back-reflection of the optical component has a different configuration in terms of its longitudinal location along the beam path depending on the lateral position of the deflected beam path.

12. Method according to Claim 11, **characterized in that** the value of the lateral position or angle deflection of the beam deflection unit is determined on the basis of a relationship, in particular a known relationship, between the ascertained longitudinal location of the back-reflection at the optical component and the lateral position of the deflected measurement radiation on the optical component.

13. Method according to at least one of Claims 11 or 12, **characterized in that** the optical component is transmitted by the measurement radiation at at least 80%, 90% or more.

14. Method according to at least one of Claims 11 to 13, **characterized in that** the optical component has a different longitudinal location of the back-reflection depending, particularly in known fashion, on a lateral position of the optical measurement radiation on the optical component.

15. Method for determining the deflection in a probe head of a coordinate measuring machine, which is embodied for a laterally scanning OCT measurement of a surface of a test object, in which a deflection value of measurement radiation of the OCT measurement is ascertained according to a method according to at least one of Claims 11 to 14.

**Revendications**

1. Système optique (1), en particulier un scanner OCT, avec un dispositif de mesure par tomographie en cohérence optique, OCT, et une unité de déviation de faisceau (2) pour la déviation de position latérale et/ou d'angle d'un trajet de faisceau du dispositif de mesure OCT, dans lequel

- un composant optique (3) se trouve dans le trajet de faisceau, lequel est conçu de telle sorte qu'en fonction de la position latérale du trajet de faisceau dévié, une réflexion en retour du composant optique est configurée différemment dans sa situation longitudinale le long du trajet de faisceau, et
- le système optique présente une unité d'évaluation (15) qui est conçue de telle sorte qu'avec le trajet de faisceau d'une mesure OCT, une valeur de la déviation de position latérale et/ou d'angle de l'unité de déviation de faisceau est déterminée à l'aide d'une situation longitudinale, déterminée par le dispositif de mesure OCT, de la réflexion en retour sur le composant optique pendant la mesure OCT, et aussi bien la détermination de la déviation de position et/ou d'angle de l'unité de déviation de faisceau qu'une mesure optique d'un objet de mesure (4) sont effectuées avec le même rayonnement OCT et
- le composant optique est disposé après l'unité de déviation de faisceau dans le trajet de faisceau et le composant optique est disposé et configuré de telle sorte que le composant optique est transmis par le trajet de faisceau.

2. Système optique (1) selon la revendication 1, **caractérisé en ce que** le composant optique est disposé et configuré de telle sorte que le composant optique est transmis par le trajet de faisceau à au moins 80 % ou 90 % ou plus.

3. Système optique (1) selon au moins l'une des revendications 1 ou 2, **caractérisé en ce que** le composant optique est conçu de telle sorte qu'il présente à différentes positions latérales sur le composant optique une réflexion en retour respective qui présente une distance de mesure OCT différente dans une situation longitudinale sensiblement orthogonale à la direction latérale, en particulier dans lequel il existe une relation connue entre la position latérale et la situation longitudinale.

4. Système optique (1) selon au moins l'une des revendications 1 à 3, **caractérisé en ce qu'**un composant optique déjà présent dans le trajet de faisceau pour un autre but est conçu comme le composant optique destiné à générer la réflexion en retour.

5. Système optique (1) selon au moins l'une des revendications 1 à 4, **caractérisé en ce que** le trajet de faisceau est dévié latéralement par l'unité de déviation sur une surface de couplage d'un guide d'image et est découplé vers un objet de mesure par le guide d'image à un emplacement sur la surface de découplage correspondant à un emplacement sur la surface de couplage du guide d'image.

6. Système optique (1) selon la revendication 5, **caractérisé en ce qu'**une surface de couplage d'entrée et/ou de découplage du guide d'image fournit une réflexion en retour pour la mesure OCT de la déviation de position et/ou d'angle.

7. Système optique (1) selon au moins l'une des revendications 1 à 6, **caractérisé en ce que** la déviation de position et/ou d'angle du trajet optique est effectuée par une surface réfléchissante mobile, la surface réfléchissante étant en particulier réalisée sous la forme d'une unité de déviation à miroir micro-électromécanique, MEM.

8. Système optique (1) selon la revendication 7, **caractérisé en ce que** le composant optique qui fournit la réflexion en retour pour la mesure OCT est formé par une partie de l'unité de déviation de faisceau, en particulier sous la forme d'une surface au moins partiellement réfléchissante de l'unité de déviation de faisceau.

9. Système optique (1) selon au moins l'une des revendications 1 à 8, **caractérisé en ce que** le système optique est conçu comme un système de mesure optique de surface sous la forme d'une tête de palpage CMM, pour une machine de mesure de coordonnées, CMM, qui fournit une mesure sous la forme d'un balayage optique de surfaces d'un objet de mesure au moyen de la mesure OCT, en particulier la tête de palpage CMM présentant un guide d'image pour le trajet de faisceau de la mesure OCT.

10. Machine de mesure de coordonnées (CMM) comprenant un système optique (1) selon au moins l'une des revendications 1 à 9.

11. Procédé pour déterminer une valeur d'une déviation de position latérale ou d'angle d'une unité de déviation de faisceau (2) dans un système optique, dans lequel, au moyen d'une mesure par tomographie en cohérence optique, OCT, une détermination d'au moins une situation longitudinale d'au moins une réflexion en retour sur un composant optique (3) dans le trajet de faisceau d'un rayonnement de mesure de la mesure OCT dévié par l'unité de déviation de faisceau (2) est effectuée, et, à l'aide de la situation longitudinale déterminée de la réflexion en retour, une détermination de la valeur de la déviation de position latérale ou d'angle de l'unité de déviation de faisceau dans le trajet de faisceau dévié par l'unité de déviation de faisceau de la mesure OCT pendant la mesure OCT est effectuée, et aussi bien la détermination de la déviation de position et/ou d'angle de l'unité de déviation de faisceau qu'une mesure optique d'un objet de mesure (4) s'effectuent avec le même rayonnement OCT, le composant optique étant disposé après l'unité de déviation de faisceau dans le trajet de faisceau et le composant optique étant transmis par le rayonnement de mesure et le composant optique étant conçu de telle sorte qu'en fonction de la position latérale du trajet de faisceau dévié, la réflexion en retour du composant optique est configurée différemment dans sa situation longitudinale le long du trajet de faisceau.

12. Procédé selon la revendication 11, **caractérisé en ce que** la détermination de la valeur de la déviation de position latérale ou d'angle de l'unité de déviation de faisceau est effectuée à l'aide d'une relation, en particulier connue, entre la situation longitudinale déterminée de la réflexion en retour sur le composant optique et la position latérale du rayonnement de mesure dévié sur le composant optique.

13. Procédé selon au moins l'une des revendications 11 ou 12, **caractérisé en ce que** le composant optique est transmis par le rayonnement de mesure à au moins 80 %, 90 % ou plus.

14. Procédé selon au moins l'une des revendications 11 à 13, **caractérisé en ce que** le composant optique présente une situation longitudinale différente de la réflexion en retour, en particulier de manière connue, qui dépend d'une position latérale du rayonnement de mesure optique sur le composant optique.

15. Méthode pour déterminer une déviation dans une tête de palpage d'une machine de mesure de coordonnées, qui est conçue pour une mesure OCT par balayage latéral d'une surface d'un objet de mesure, dans laquelle une valeur de déviation d'un rayonnement de mesure de la mesure OCT est déterminée par un procédé selon au moins l'une des revendications 11 à 14.

**Fig. 1a**

**Fig. 1b**

**Fig. 1c**

**Fig. 2a**

**Fig. 2b**

**Fig. 2c**

Fig. 3

Fig. 4a

Fig. 4b

**Fig. 5**

**Fig. 6a**

**Fig. 6b**

**Fig. 7a**

**Fig. 7b**

**Fig. 7c**

**Fig. 8a**

**Fig. 8b**

**Fig. 8c**

**Fig. 8d**

**Fig. 8e**

**Fig. 9a**

**Fig. 9b**

50
Ablenken eines Strahlengangs einer optical coherence tomography (OCT) Messstrahlung mit einer Ablenkeinheit

51
Bestimmen einer longitudinale Lage von zumindest einem Rückreflex an einer optischen Komponente im Strahlengang mittels einer optical coherence tomography Messung

52
Bestimmen eines Werts der Ablenkung der Ablenkeinheit anhand der longitudinale Lage des zumindest einen Rückreflex anhand einer bekannten Geometrie der Rückreflexe an der optischen Komponente (insbesondere wobei die Geometrie derart ausgebildet ist, dass diese in Abhängigkeit der Ablenkung entlang des Strahlengangs longitudinal variiert)

53
Bereitstellen des Werts der Ablenkung der Ablenkeinheit

54
Regeln des Ablenkens der Ablenkeinheit, sodass der Wert der Ablenkung einem Sollwert angenähert wird

**Fig. 10**

**Fig. 11a**

**Fig. 11b**

**Fig. 11c**

**Fig. 11d**

**Fig. 11e**

**Fig. 11f**

**Fig. 11g**

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 2017261308 A
- US 2017307353 A
- WO 2014096262 A
- US 2017020387 A
- EP 2690395 A
- WO 2017220510 A
- DE 202017105001
- DE 102013002400
- DE 102015216770
- EP 3182062 A

**In der Beschreibung aufgeführte Nicht-Patentliteratur**

- Coherent fibre bundles in full-field swept-source OCT. *SPIE,* 2009, 7168
- Fibre imaging bundles for full-field OCT. *Meas. Sci. Tech.,* 2007, vol. 18, 2949
- Passive OCT probe head for 3D duct inspection. *Meas. Sci. Tech.,* vol. 24 (9), 2013